# EUROPÄISCHE PATENTSCHRIFT

(11) **EP 3 248 913 B1**
(45) Veröffentlichungstag und Bekanntmachung des Hinweises auf die Patenterteilung: **08.05.2019**
(21) Anmeldenummer: 17163887.7
(22) Anmeldetag: 30.03.2017
(51) Int. Cl.: B65G 47/29

(54) **SINGULATIONSFÖRDERER UND VERFAHREN ZUM FÖRDERN UND VEREINZELN VON STÜCKGUT ENTLANG WENIGSTENS EINER TRANSPORTBAHN**
SINGULATION CONVEYOR AND METHOD FOR CONVEYING AND SEPARATING PIECE GOODS ALONG AT LEAST ONE CONVEYING SYSTEM
CONVOYEUR DE SINGULARISATION ET PROCÉDÉ DE TRANSPORT DESTINÉS À SÉPARER UNE MARCHANDISE DE DÉTAIL LE LONG D'AU MOINS UNE BANDE DE TRANSPORT

(30) Priorität: 20.05.2016 DE 102016109315
(43) Veröffentlichungstag der Anmeldung: 29.11.2017
(73) Patentinhaber: Deutsche Post AG, 53113 Bonn (DE)
(72) Erfinder: Hartmann, Bernd, 53501 Grafschaft-Leimersdorf (DE); Grafe, Wolfram, 18107 Elmenhorst (DE)
(74) Vertreter: Cohausz & Florack

(56) Entgegenhaltungen:
- EP-A1- 0 278 909
- EP-A2- 1 144 279
- DE-B3-102007 017 416
- US-A- 4 130 193
- US-A- 4 634 328
- US-A1- 2006 070 854
- US-B1- 6 471 044

## Beschreibung

### Gebiet

Die Erfindung betrifft einen Singulationsförderer zum Fördern und Vereinzeln von Stückgut, insbesondere von Packstücken und/oder Sendungen, entlang wenigstens einer die Stückgüter tragenden Transportbahn. Ferner betrifft die Erfindung ein Verfahren zum Fördern und Vereinzeln von Stückgut, insbesondere von Packstücken und/oder Sendungen, entlang wenigstens einer die Stückgüter tragenden Transportbahn eines Singulationsförderers der vorgenannten Art.

### Hintergrund

Stückgut, das als Haufen, Stapel oder dergleichen vorliegt, muss vor der weiteren Handhabung oft vereinzelt werden. Nach dem Vereinzeln kann das Stückgut beispielsweise sortiert werden, und zwar insbesondere durch automatisierte Anlagen. Zum Vereinzeln werden die Stückgüter meist auf eine Transporteinrichtung in Form eines Singulationsförderers gekippt, der den Transport der Stückgüter und die Vereinzelung der Stückgüter entlang des Transportwegs bewirkt. Die Singulation oder Vereinzelung der Stückgüter wird dabei typischerweise dadurch erreicht, dass den entlang der Transportbahn des Singulationsförderers geförderten Stückgütern zusätzliche Bewegungskomponenten aufgeprägt werden. Die Bewegungskomponenten können nacheinander und/oder in unterschiedliche Richtungen auf die Stückgüter aufgeprägt werden. Bedarfsweise geschieht dies wiederholt, um die Stückgüter schrittweise zu vereinzeln. Die vereinzelten Stückgüter verteilen sich auf der Transportbahn vorzugsweise so, dass die Stückgüter untereinander in wenigstens einer Richtung beabstandet sind. Die Stückgüter können also zwischeneinander in der Transportrichtung des Singulationsförderers und/oder quer dazu beabstandet sein. Die so vereinzelten Stückgüter können dann beispielsweise Sortiereinrichtungen zugeführt werden, in denen die Stückgüter nach vorgegebenen Kriterien sortiert werden.

Die Transportbahn für die Stückgüter ist meist in einer Ebene angeordnet. Im Verlaufe der Transportbahn kann diese aber auch unterschiedliche Ebenen definieren. In der jeweiligen von der Transportbahn gebildeten Ebene liegen die Stückgüter auf der Transportbahn auf und werden in dieser Position vom Singulationsförderer in Transportrichtung bewegt. Somit werden die Stückgüter entlang dieser wenigstens einen Ebene transportiert und vereinzelt. Dabei werden die Stückgüter meist wenigstens im Wesentlichen geradlinig transportiert. Die Stückgüter können aber auch um Kurven geführt werden. Dabei gibt dann die Erstreckung der Transportbahn die Transportrichtung der Stückgüter vor, die sich entlang der Transportbahn ändern kann. Hinzukommt, dass die Stückgüter zum Zwecke der Vereinzelung eine Bewegungskomponente quer zur eigentlichen Transportrichtung aufweisen können. Diese dient jedoch eher dem Vereinzeln denn dem Transport, weshalb diese zusätzliche Bewegungskomponente die eigentliche Transportrichtung der Stückgüter nicht verändert, so dass Stückgüter in dieselbe Transportrichtung bewegt werden und zugleich quer dazu vereinzelt werden können.

Die Stückguter können beispielsweise Produkte oder Waren sein. Insbesondere handelt es sich um Packstücke, bei denen es sich um mit Packungen verpackte Stückgüter, wie Waren, Sendungen oder andere Güter handelt. Sendungen werden typischerweise bestimmten Adressaten zugestellt. Zudem handelt es sich bei Sendungen oftmals um Packstücke, also verpackte Stückgüter. Vor der Zustellung der Sendungen bei den Adressaten der Sendungen erfolgt vielfach eine Vorsortierung in einer Zustellbasis, etwa nach dem räumlichen Gebiet der Adressaten. Bei der Zustellbasis kann es sich beispielsweise um ein sogenanntes Paketzentrum, ein Warenlager oder dergleichen handeln. Die Sendungen können nach der Sortierung zugestellt oder aber weiter sortiert werden, was beispielsweise an einem anderen Ort erfolgen kann als die vorhergehende Sortierung. Die Zustellung kann an Adressaten der Sendungen oder bei entsprechenden Abgabestellen, wie beispielsweise Paketkästen oder Packstationen, bewirkt werden.

Als Stückgüter, Packstücke und/oder Sendungen werden vorliegend recht unterschiedliche Gegenstände angesehen, die vorzugsweise hinsichtlich ihrer Größe und ihres Gewichts mit überschaubarem Aufwand transportiert werden können. Dabei kommen Gegenstände des täglichen Bedarfs, wie Verbrauchsmaterialien oder Lebensmittel ebenso in Frage wie technische Gegenstände und Gerätschaften. In vielen Fällen handelt es sich bei den Sendungen um Briefsendungen, Paketsendungen und/oder Flyer. Dabei umfassen Paketsendungen auch Päckchen, während Flyer auch Prospekte, Broschüren und Zeitschriften sein können.

Singulationsförderer weisen vielfach Gurtförderer mit angetriebenen Gurten oder Riemen, Rollenförderer mit drehbaren Rollen oder Walzen oder Kettenförderer mit umlaufenden Ketten auf. Hinzu kommen dann noch Einrichtungen zum Vereinzeln der Stückgüter. So sind beispielsweise Singulationsförderer bekannt, die unterschiedlich schnell angetriebene Gurte oder Bänder aufweisen, um die Stückgüter entlang der Transportrichtung zu vereinzeln. Es können aber auch Verzweigungseinrichtungen vorgesehen sein, die die Stückgüter quer zur eigentlichen Transportrichtung der Stückgüter verteilen.

Die bekannten Singulationsförderer sind oftmals apparativ sehr aufwendig, benötigen teilweise viel Platz und können nur bedingt in Bezug auf die zu vereinzelnden Stückgüter angepasst werden. EP 1 144 279 A2 beschreibt einen Singulationsförderer nach dem Oberbegriff des Anspruchs 1.

### Zusammenfassung einiger beispielhafter Ausführungsformen der Erfindung

Der vorliegenden Erfindung liegt die Aufgabe zugrunde, den Singulationsförderer und das Verfahren jeweils der eingangs genannten und zuvor näher beschriebenen Art derart auszugestalten und weiterzubilden, dass das Fördern und Vereinzeln der Stückgüter apparativ einfacher, platzsparender und besser anpassbar an die zu vereinzelnden Stückgüter erfolgen kann.

Bei der vorliegenden Erfindung wird diese Aufgabe durch einen Singulationsförderer mit den Merkmalen des Anspruchs 1 gelöst.

Die genannte Aufgabe ist zudem gemäß Anspruch 9 durch ein Verfahren zum Fördern und Vereinzeln von Stückgut, insbesondere von Packstücken und/oder Sendungen, entlang wenigstens einer die Stückgüter tragenden Transportbahn eines Singulationsförderers nach einem der Ansprüche 1 bis 8, gelöst, wobei in der Transportbahn abschnittsweise zwischen einer unteren Stellung und einer oberen Stellung verstellbare Fingerelemente vorgesehen sind, wobei die freien Enden der Fingerelemente in der oberen Stellung in einer oberen Position oberhalb eines angrenzenden Bereichs der Transportbahn angeordnet sind,
- bei dem die Fingerelemente wiederholt aus der unteren Stellung in die obere Stellung verstellt werden, um die Bewegungsrichtung und/oder die Bewegungsgeschwindigkeit jeweils einzelner Stückgüter unabhängig von anderen Stückgütern zu manipulieren und
- bei dem die Stückgüter durch das wiederholte Verstellen der Fingerelemente aus der unteren Stellung in die obere Stellung entlang der Transportbahn und/oder quer zur Transportbahn vereinzelt werden.

Durch die Fingerelemente in der Transportbahn kann eine leichte Manipulation der Bewegungsrichtung der Stückgüter unabhängig von anderen Stückgütern, insbesondere von benachbarten Stückgütern erreicht werden. Es ist also eine gezielte Manipulation der Bewegung einzelner Stückgüter möglich. Dabei kann ein Stückgut, das ein Fingerelement passiert, in seiner Bewegungsrichtung manipuliert werden, indem das Fingerelement in die obere Stellung verstellt wird. Dies ist aber anders als beispielsweise bei unterschiedlich schnell angetriebenen Gurten von Gurtförderern nicht erforderlich. Bedarfsweise muss die Verstellung der Fingerelemente nicht dem immer gleichen Prinzip folgen, sondern es kann eine Anpassung an die jeweilige Situation in Bezug auf die gewünschte Vereinzelung erfolgen. Die Manipulation der Stückgüter hinsichtlich ihrer Bewegung erfolgt durch ein Fingerelement vorzugsweise nur in einer über die Transportbahn angehobenen Stellung. Dabei kann ein Fingerelement aber bedarfsweise je nach der gewünschten Manipulation der Bewegung eines Stückguts unterschiedlich weit angehoben werden. Die Fingerelemente können also bedarfsweise unterschiedliche Stellungen zwischen einer oberen und einer unteren Stellung einnehmen und diese für eine gewisse Zeit beibehalten. Die Manipulation der Bewegung von Stückgütern kann zudem je nach Art der Fingerelemente und deren Verstellung sowohl hinsichtlich der Richtung als auch hinsichtlich der Geschwindigkeit erfolgen.

Ein weiterer Vorteil ist, dass die Fingerelemente klein ausgebildet werden können, was den Platzbedarf für den Singulationsförderer verringert und die gezielte separate Manipulation einzelner Stückgüter unabhängig von den angrenzenden Stückgütern erlaubt. Zudem können so recht viele Fingerelemente in einen Singulationsförderer integriert werden, um sehr viele unterschiedliche und jeweils geringfügige Manipulationen von Bewegungen von Stückgütern durchführen zu können. Außerdem müssen die Fingerelemente nicht in ihrer jeweiligen Stellung verharren, sondern können wiederholt nach oben und unten verstellt werden, während die Fingerelemente von den zu vereinzelnden Stückgütern passiert werden. Auf diese Weise kann die Vereinzelung sehr gezielt erfolgen, ohne einen erheblichen apparativen Aufwand zu betreiben und/oder einen sehr großen Singulationsförderer zu benötigen.

Nachfolgend werden der besseren Verständlichkeit halber und zur Vermeidung unnötiger Wiederholungen der Singulationsförderer und das Verfahren gemeinsam beschrieben, ohne stets im Einzelnen sprachlich zwischen dem Singulationsförderer und dem Verfahren zu unterscheiden. Dem Fachmann ist jedoch anhand des Kontextes jeweils ersichtlich, welche Merkmale hinsichtlich des Singulationsförderers und hinsichtlich des Verfahrens bevorzugt sind.

Bei einer ersten besonders bevorzugten Ausgestaltung des Singulationsförderers weist dieser wenigstens abschnittsweise wenigstens einen Rollenförderer, Riemenförderer und/oder Gurtförderer auf, der auch als Bandförderer angesehen werden kann. Der wenigstens eine Rollenförderer, Riemenförderer und/oder Gurtförderer bewirkt damit den eigentlichen Transport der Stückgüter entlang der Transportbahn, und zwar ohne Beteiligung der Fingerelemente, die jedoch bedarfsweise den entsprechenden Transport unterstützen können. Im Ergebnis ist bevorzugt die Transportbahn wenigstens angrenzend zu den Fingerelementen und/oder wenigstens mit Ausnahme der Fingerelemente durch wenigstens einen Rollenförderer, Riemenförderer und/oder Gurtförderer bereitgestellt. Die Fingerelemente können also zwischen entsprechenden Förderern vorgesehen oder auch in diese integriert sein. Mit anderen Worten lassen sich die Fingerelemente entlang der Transportbahn verteilen, wobei die Fingerelemente nicht gleichmäßig entlang und/oder quer zur Transportbahn verteilt sein müssen. Es können beispielsweise Abschnitte aus Fingerelementen oder mit Fingerelementen und Abschnitte ohne Fingerelemente aufeinander folgen oder sich abwechseln. Neben, vor, hinter und/oder zwischen Fingerelementen können dann Förderer der genannten Art vorgesehen sein. Alternativ können die Fingerelemente auch in die Förderer entlang der Transportbahn integriert sein. Dies ist besonders einfach im Falle von Rollenförderern möglich. Unabhängig davon ist es bevorzugt, wenn der wenigstens eine Rollenförderer leicht in Transportrichtung der Stückgüter geneigt ist. Mithin kann also die Transportbahn insbesondere bei Verwendung wenigstens eines Rollenförderers eine leichte Neigung aufweisen, um die Schwerkraft zum Transport der Stückgüter ausnutzen zu können. Die Fingerelemente können so in oder zwischen Förderern angeordnet sein, dass die Fingerelemente die Stückgüter wenigstens teilweise tragen, wenn die Fingerelemente in der oberen Stellung angeordnet sind. Die Stückgüter liegen also nicht flach auf der Transportbahn auf, sondern werden leicht durch die Fingerelemente angehoben, was zu einer Manipulation, also zu einer wenigstens leichten Veränderung der Bewegungsrichtung und/oder der Bewegungsgeschwindigkeit der Stückgüter führt.

Die Anordnung der Fingerelemente in Bezug zur Transportbahn bzw. in Bezug zur Transportrichtung der Stückgüter entlang der Transportbahn bestimmt über die Richtung, in welche die Bewegungsrichtung der einzelnen Stückgüter durch die Fingerelemente manipuliert wird. Dies beruht im Wesentlichen darauf, dass die Finger mit einem Ende an der Transportbahn bzw. dem Singulationsförderer festgelegt sind, während das freie Ende der Fingerelemente jeweils angehoben werden kann, um das Fingerelement in die obere Stellung zu verstellen. Zum gezielten Manipulieren der Stückgüter und Vereinzeln derselben können wenigstens einige Fingerelemente in Richtung der freien Enden der jeweiligen Fingerelemente wenigstens im Wesentlichen in die Transportrichtung der Stückgüter entlang der Transportbahn weisen. Mit anderen Worten weisen vorzugsweise einige Fingerelemente mit ihren freien Enden wenigstens im Wesentlichen in die Transportrichtung der Stückgüter. Werden die Fingerelemente in die obere Stellung angehoben, stellen sich die Fingerelemente den Stückgütern in den Weg, ohne jedoch den Weitertransport der Stückgüter zu verhindern. Die Stückgüter müssen wenigstens teilweise über die Fingerelemente hinweg gelangen. Dies kann, ohne dass die Stückgüter über die Fingerelemente angetrieben werden, zu einem Abbremsen der Stückgüter führen. Alternativ oder zusätzlich können Fingerelemente vorgesehen sein, die mit ihren freien Enden wenigstens im Wesentlichen entgegen der Transportrichtung der Stückgüter entlang der Transportbahn weisen. Werden die Fingerelemente in die obere Stellung angehoben, können die Fingerelemente das Weitertransportieren der Stückgüter in der Transportrichtung behindern, indem die Stückgüter gegen die freien Enden der Fingerelemente stoßen. Werden die Fingerelemente dagegen erst angehoben, wenn die Stückgüter die freien Enden der Fingerelemente bereits zu einem großen Teil oder gar ganz passiert haben, können die Stückgüter durch die angehobenen Fingerelemente beschleunigt werden. Unabhängig davon, in welche Richtung die Fingerelemente weisen, kann es sein, dass die Stückgüter durch die Fingerelemente nur an einer Seite angehoben werden. Dann wird den Stückgütern zusätzlich oder alternativ eventuell auch eine Bewegungskomponente quer zur Transportrichtung aufgeprägt und zwar zu der Seite, die weg vom freien Ende des Fingerelements weist. Die entsprechende Manipulation der Bewegungsrichtung der Stückgüter kann so oder so zu einer Vereinzelung der Stückgüter führen, und zwar insbesondere für den Fall, dass die Bewegungen wenigstens einiger Stückgüter entlang der Transportbahn nacheinander mehrfach durch unterschiedliche Fingerelemente manipuliert werden.

Besonders bevorzugt ist es, wenn die wenigstens im Wesentlichen in die Transportrichtung oder entgegen der Transportrichtung weisenden Fingerelemente nicht zu breit sind, so dass nur einzelne, insbesondere bestimmte Stückgüter, hinsichtlich der Bewegung manipuliert werden. Würden sich die Fingerelemente über die gesamte Breite der Transportbahn erstrecken, würden alle nebeneinander angeordneten Stückgüter manipuliert, und zwar bedarfsweise in gleicher Weise, was für eine gezielte und zügige Vereinzelung hinderlich sein kann. Die Breite wenigstens von einigen Fingerelementen quer zur Transportbahn beträgt also vorzugsweise weniger als 50%, vorzugsweise weniger als 23%, insbesondere weniger als 18%, weiter insbesondere weniger als 10%, der Breite der Transportbahn im Bereich der Fingerelemente. Je geringer der Wert, desto flexibler und gezielter die Vereinzelung. Allerdings sind dann bedarfsweise mehr Fingerelemente nötig, um diese in geeigneten Abständen über die Breite der Transportbahn zu verteilen. Alternativ oder zusätzlich ist es bevorzugt, wenn die Länge wenigstens einiger Fingerelemente in Richtung des freien Endes weniger als 18%, vorzugsweise weniger als 10%, insbesondere weniger als 5%, weiter insbesondere weniger als 2%, der Länge der Transportbahn beträgt. So können die Fingerelemente einfach in die obere Stellung und zurückverstellt werden. Außerdem können so auf kürzerem Transportweg mehrere Fingerelemente hintereinander in der Transportbahn vorgesehen sein, um die Vereinzelung schrittweise und bei geringem Platzbedarf bewerkstelligen zu können.

Unabhängig von den zuvor beschriebenen Fingerelementen können die freien Enden wenigstens einiger Fingerelemente wenigstens im Wesentlichen quer zur Transportrichtung der Stückgüter entlang der Transportbahn weisen. Dabei können die Fingerelemente wenigstens im Wesentlichen in dieselbe Richtung oder aber wenigstens im Wesentlichen in entgegengesetzte Richtungen quer zur Transportrichtung der Stückgüter bzw. quer zur Transportbahn weisen. Die Fingerelemente können am freien Ende angehoben und so in die obere Stellung verstellt werden. Damit werden die über die Finger transportierten Stückgüter an einer Seite weiter angehoben als an der anderen Seite bzw. gegenüber der Transportbahn. Auf diese Weise wird dem entsprechenden Stückgut infolge der Gewichtskraft eine Bewegungskomponente zur Seite aufgeprägt. Wenn die Fingerelemente in entgegengesetzte Richtungen weisen, können den Stückgütern so einfach in Transportrichtung der Stückgüter bzw. entlang der Transportbahn gesehen Bewegungskomponenten sowohl nach rechts als auch nach links aufgeprägt werden, um so eine Vereinzelung quer zur Transportrichtung der Stückgüter bzw. quer zur Transportbahn zu erreichen.

Bei den quer zur Transportbahn bzw. zur Transportrichtung der Stückgüter ausgerichteten Fingerelementen bietet es sich an, wenn sich diese nicht über die gesamte Breite der Transportbahn erstrecken, so dass gezielt einzelnen und nicht allen nebeneinander angeordneten Stückgütern mittels eines Fingerelements eine Bewegungsrichtung zur gleichen Seite aufgeprägt wird. Daher beträgt die Länge wenigstens einiger Fingerelemente in Richtung zum freien Ende quer zur Transportbahn weniger als 50%, vorzugsweise weniger als 23%, insbesondere weniger als 18%, weiter insbesondere weniger als 10%, der Breite der Transportbahn im Bereich der Fingerelemente. Je kürzer die Fingerelemente ausgebildet sind, desto eher können nebeneinander angeordneten Stückgütern unabhängig voneinander Bewegungskomponenten zur Seite aufgeprägt werden. Allerdings müssen dazu bedarfsweise umso mehr Fingerelemente über die Breite der Transportbahn verteilt angeordnet sein, so dass auf die gewünschten Stückgüter Bewegungskomponenten aufgeprägt werden können, wenn diese über die Breite der Transportbahn verteilt herantransportiert werden. Alternativ oder zusätzlich kann die Breite wenigstens einiger quer zur Transportbahn ausgerichteter Fingerelemente weniger als 10%, vorzugsweise weniger als 5%, insbesondere weniger als 2%, weiter insbesondere weniger als 1%, der Länge der Transportbahn betragen. So wird nicht so viel Platz zur entsprechenden Manipulation der Bewegung von Stückgütern benötigt und steht mehr Platz für weitere Fingerelemente zur Verfügung, um den Stückgütern anschließend eine Bewegungskomponente in dieselbe oder eine andere Richtung aufzuprägen.

Die Fingerelemente können vorzugsweise so ausgebildet sein, dass die Stückgüter durch die Fingerelemente nicht vollständig, insbesondere nicht wesentlich abgebremst werden, um das Fördern der Stückgüter und das Vereinzeln derselben entlang der Transportbahn nicht zu sehr zu beeinträchtigen. Zu diesem Zweck können die Fingerelemente mit einer entsprechend glatten Oberfläche versehen werden. Noch bevorzugter wird es jedoch regelmäßig sein, wenn die Fingerelemente Transportmittel für den Transport der Stückgüter, vorzugsweise in der Transportrichtung der Stückgüter entlang der Transportbahn aufweisen. Somit ist jedenfalls eine Förderung der Stückgüter in der Transportrichtung derselben sichergestellt. Die Transporteinrichtungen können drehbare Rollen oder Walzen aufweisen. Es sind aber auch bewegliche Gurte oder Riemen denkbar. Dabei benötigen die Rollen und Walzen bedarfsweise keinen eigenen Antrieb, während die Gurte oder Riemen der Fingerelemente motorisch angetrieben sein können. Mit anderen Worten bilden die Fingerelemente, bedarfsweise unabhängig von der übrigen Transportbahn Rollen-, Gurt- und/oder Riemenförderer.

Alternativ oder zusätzlich kann die wenigstens eine Transportbahn wenigstens abschnittsweise, insbesondere angrenzend zu wenigstens einigen Fingerelementen, durch wenigstens einen Rollenförderer, Riemenförderer und/oder Gurtförderer gebildet sein. Entsprechende Förderer dienen dabei dem grundsätzlichen Transport der Stückgüter entlang der Transportbahn, während dieser Transport bedarfsweise durch die Fingerelemente unterstützt werden kann. Die Fingerelemente können durch eigene Förderer aber auch die Manipulation der Bewegungskomponenten der Stückgüter verstärken. Insoweit kann gezielt auf die Stückgüter eingewirkt werden, um diese zu vereinzeln. Zudem können entlang der Transportbahn unterschiedliche Förderer vorgesehen sein, die der gleichen Art angehören können. So können beispielsweise mehrere Gurtförderer vorgesehen sein, deren Gurte bedarfsweise unterschiedlich schnell angetrieben werden. Es können aber auch an unterschiedlichen Stellen der Transportbahn unterschiedliche Arten von Förderern vorgesehen sein. So kann beispielsweise die Transportbahn überwiegend als Rollenförderer ausgebildet sein, abschnittsweise zur Beschleunigung der Stückgüter aber zusätzlich wenigstens einen Gurtförderer aufweisen.

Um weiter Platz zu sparen oder die Stückgüter zu sortieren, kann es sich anbieten, wenn wenigstens abschnittsweise zwei Transportbahnen übereinander vorgesehen sind. Zudem können dann die Fingerelemente wenigstens einer Transportbahn so angeordnet sein, dass durch ein Verstellen der Fingerelemente in die obere Stellung und/oder die untere Stellung eine Verbindung von der einen Transportbahn zur wenigstens einen anderen Transportbahn geschaffen wird. So kann dann erreicht werden, dass die Stückgüter von einer Transportbahn nach unten auf eine andere Transportbahn, nach oben auf eine ebenfalls andere Transportbahn und/oder auf der wenigstens einen Transportbahn weitertransportiert wird. Hier sind unterschiedliche Kombinationen möglich. Es kann beispielsweise so sein, dass die Verteilten Stückgüter anschließend auf wenigstens zwei Transportbahnen unabhängig voneinander weiter vereinzelt werden, was zu einer erheblichen Platzersparnis führen kann. Alternativ oder zusätzlich kann eine Sortierung der Stückgüter erfolgen, indem diese je nach der Stellung der Fingerelemente an eine weitere Transportbahn nach oben und/oder eine weitere Transportbahn nach unten verteilt werden. Es kann dabei auch vorgesehen sein, dass Stückgüter bedarfsweise entlang derselben Transportbahn weitertransportiert und nicht nach oben oder unten auf eine andere Transportbahn geleitet werden. Bei mehreren Fingerelementen nebeneinander können diese vorzugsweise so verstellt werden, dass benachbarte Stückgüter zeitlich unterschiedlich weitergeleitet werden. So kann beispielsweise ein Stückgut geradeaus entlang derselben Transportbahn geleitet werden, während zeitgleich ein anderes Stückgut nach oben auf eine andere Transportbahn und/oder ein anderes Stückgut nach unten auf eine andere Transportbahn geleitet wird.

Erfindungsgemäß weisen die Fingerelemente jeweils wenigstens zwei sich gemeinsam in Längsrichtung des Fingerelements bis wenigstens im Wesentlichen zum freien Ende des Fingerelements erstreckende flexible Flankenelemente auf, wobei die flexiblen Flankenelemente vorzugsweise in Längsrichtung der Fingerelemente jeweils über eine Mehrzahl von Stegen flexibel miteinander verbunden sind. Auf diese Weise können die freien Enden der Fingerelemente einfach von einer unteren Stellung in eine obere Stellung und zurück verstellt werden. Zudem kann das Verstellen der Fingerelemente, insbesondere in die obere Stellung, mit einem Krümmen der Fingerelemente einhergehen. In einer nicht angehobenen Stellung der Fingerelemente können diese eine gestreckte Ausrichtung haben. Beim Verstellen aus dieser gestreckten Ausrichtung nach unten kann es dann wiederum zu einem Krümmen des Fingerelements kommen, und zwar insbesondere in die entgegengesetzte Richtung. Die Fingerelemente können zudem den sogenannten Fin Ray Effekt nutzen, der bei Schwanzflossen von Knochenfischen beobachtet wurde. Drückt man mit dem Finger seitlich gegen sie, krümmen sich die Flossen infolge des Fin Ray Effekts nicht weg, sondern sie biegen sich dem Finger entgegen. Möglich wird dies durch den speziellen Aufbau der Flossen, die durch die Fingerelemente in der vorbeschriebenen Ausgestaltung nachgebildet wird.

Dazu weisen die Fingerelemente wenigstens zwei sich gemeinsam von einem Ende des Fingerelements zu einem gegenüberliegenden Ende des Fingerelements erstreckende flexible Flankenelemente auf. Die Flexibilität der Flankenelemente kann beispielsweise durch elastische Flankenelemente oder durch eine Gliederkette aus schwenkbar oder gelenkig miteinander verbundenen starren Kettengliedern bereitgestellt werden. Dabei wird eine entsprechende Flexibilität lediglich in eine Raumrichtung gefordert. In den Raumrichtungen senkrecht dazu ist eine Flexibilität nicht zwingend erforderlich. Daher können die Flankenelemente auch problemlos beispielsweise streifenförmig ausgebildet werden, wobei sich in der Ebene des Streifens eine erhöhte Biegesteifigkeit ergeben kann. Alternativ ist aber auch eine stabförmige Ausgestaltung der Flankenelemente möglich. Die entsprechende Flexibilität der Flankenelemente erlaubt letztlich eine Krümmung der Fingereinheit ausgehend von einer gestreckten Stellung in eine gekrümmte Stellung beispielsweise ähnlich der Krümmung eines Fingers, insbesondere nach oben oder nach unten.

Damit die Krümmung der Fingerelemente in eine Richtung beispielsweise durch einen Druck gegen die Fingereinheit, insbesondere gegen ein Flankenelement, in die entgegengesetzte Richtung ausgelöst werden kann, sind die wenigstens zwei Flankenelemente zwischen den beiden Enden der Fingerelemente über eine Mehrzahl von Stegen jeweils flexibel miteinander verbunden. Dabei können die Stege starr ausgebildet und schwenkbar oder gelenkig mit den Flankenelementen verbunden sein. Es können aber, bedarfsweise alternativ zu schwenkbaren oder gelenkigen Verbindungen zu den wenigstens zwei Flankenelementen, auch flexible, insbesondere elastische Stege verwendet werden. Auf diese Weise wird erreicht, dass die Stege gegenüber den wenigstens zwei Flankenelementen geschwenkt werden können, um so eine Krümmung des Fingerelements zu ermöglichen.

Der Aufbau der Fingerelemente erlaubt gegebenenfalls eine Krümmung derselben, wenn etwa ein Stückgut auf ein Fingerelement drückt. Die Fingerelemente können aufgrund ihres Aufbaus aber insbesondere gezielt gekrümmt werden, was zur einem Anheben bzw. Absenken des freien Endes der Fingerelemente führt, ohne dass es dazu eines Kontakts etwa mit einem Stückgut bedarf. Die Krümmung bzw. Verstellung der Fingerelemente, wobei insbesondere das Anheben und das Absenken der freien Enden der Fingerelemente im Fokus steht, erfolgt beispielsweise, indem die Flankenelemente in Längsrichtung der entsprechenden Fingerelemente gegeneinander verstellt werden. Die Form der Fingerelemente ergibt sich dann zwangsweise, und zwar insbesondere abhängig von der Verbindung der Flankenelemente untereinander über die Stege dazwischen. In einer einfachen Ausgestaltung können die Flankenelemente in einer Stellung eines Fingerelements spiegelsymmetrisch und/oder die Stege parallel zueinander ausgerichtet sein. Ein unbeabsichtigtes Krümmen der Fingerelemente durch die von den Stückgütern auf die Fingerelemente übertragene Gewichtskraft kann vermieden werden, indem ein gegenseitiges Verstellen der flexiblen Flankenelemente verhindert wird.

Um die Fingerelemente beispielsweise nicht nur in einer Ebene verstellen zu können, können die Fingerelemente beispielsweise auch drei oder mehr Flankenelemente aufweisen, die untereinander über Stege verbunden sind. Eine Verstellbarkeit der Fingerelemente in einer Richtung, nämlich insbesondere der vertikalen Richtung, wird jedoch im Regelfall ausreichend sein.

Um eine geeignete Beweglichkeit und damit die Verstellbarkeit der Fingerelemente sicherstellen zu können, bietet es sich an, wenn die Stege und die zugehörigen flexiblen Flankenelemente zu einer Seite einen spitzen Winkel von vorzugsweise zwischen 10° und 80° und zur anderen Seite einen stumpfen Winkel von vorzugsweise zwischen 100° und 170° bilden. Rechte Winkel können dagegen die Verstellbarkeit der Fingerelemente behindern oder einschränken.

Um die Fingerelemente verstellen und dabei die freien Enden der Fingerelemente in gewünschter Weise anheben und wieder absenken zu können, können die flexiblen Flankenelemente der Fingerelemente jeweils in Längsrichtung der Fingerelemente gegeneinander verstellbar sein. Um die Fingerelemente möglichst unabhängig voneinander verstellen zu können, bietet es sich an, wenn die Flankenelemente unterschiedlicher Fingerelemente unterschiedlich verstellt werden können. Die Verstellung der Flankenelemente erfolgt vorzugsweise mit wenigstens einer entsprechenden Antriebseinrichtung, über die Fingerelemente in der gewünschten Weise angesteuert werden können, um die gewünschte Stellung der Fingerelemente sicherzustellen. Bedarfsweise kann die separate Verstellung der Fingerelemente einfach erreicht werden, indem den verschiedenen Fingerelementen wenigstens teilweise separate Antriebseinrichtungen zugeordnet werden. Auf diese Weise wird eine hohe Flexibilität bei der Vereinzelung erreicht und die Vereinzelung bereits nach einem kurzen Transportweg ermöglicht. Besonders bevorzugt können die Fingerelemente wenigstens im Wesentlichen alle unabhängig voneinander verstellt werden. Dies kann jedoch viele Antriebseinrichtungen erfordern. Es kann beispielsweise wenigstens im Wesentlichen jedem Fingerelement eine Antriebseinrichtung zugeordnet sein.

Um ein gezieltes Vereinzeln der Stückgüter zu erreichen, kann es bevorzugt sein, wenn wenigstens ein, vorzugsweise optischer, Sensor zum Erfassen von zu vereinzelnden Stückgütern vorgesehen ist, um so das Vereinzeln an die jeweiligen Anforderungen anpassen zu können. Der wenigstens eine Sensor erfasst dabei vorzugsweise die Anzahl und/oder Art der Lage einzelner zu vereinzelnder Stückgüter, die Abmessungen einzelner Stückgüter, die Anordnung eines Haufens von Stückgütern und/oder die Form eines Haufens von Stückgütern. All diese Parameter können separat oder zusammen Auswirkungen auf eine möglichst rasche und zielgerichtete Vereinzelung haben. Diese Auswirkungen können berücksichtigt werden, wenn die Parameter erfasst werden. Bedarfsweise können mehrere Sensoren entlang der Transportbahn vorgesehen sein. So kann mehrfach anhand eines Istzustands eine Anpassung des Vereinzelns erfolgen.

Für eine geeignete Steuerung der Vereinzelung unter Berücksichtigung relevanter Zusammenhänge in Bezug auf das Vereinzeln, kann wenigstens eine Steuereinrichtung zur Steuerung des Verstellens von wenigstens einigen Fingerelementen zeitabhängig, abhängig von der Anzahl und/oder Art einzelner Stückgüter und/oder abhängig von wenigstens einem von dem Sensor erfassten Parameter vorgesehen sein.

Alternativ oder zusätzlich ist es bevorzugt, eine Stelleinrichtung zum Verstellen der Höhe der freien Enden der Fingerelemente zeitabhängig, abhängig von der Anzahl und/oder Art einzelner Stückgüter, abhängig von wenigstens einem von dem Sensor erfassten Parameter und/oder abhängig von Signalen der Steuereinrichtung vorzusehen. Die wenigstens eine Stelleinrichtung kann beispielsweise die Antriebseinrichtungen zum Verstellen der Fingerelemente ansteuern. Die Stelleinrichtung gibt dann das Verstellen bzw. die Stellung der Fingerelemente vor, während die Antriebseinrichtung das Verstellen der Fingerelemente mechanisch bewirkt.

Bei der erfindungsgemäßen Augestaltung des Verfahrens ist es entsprechend den vorstehenden Ausführungen zum Singulationsförderer vorgesehen, dass einzelne Stückgüter durch das Verstellen von in die Transportrichtung der Transportbahn weisenden Fingerelementen von der unteren Stellung in die obere Stellung, insbesondere gegenüber anderen angrenzenden Stückgütern, beschleunigt werden und/oder dass einzelne Stückgüter durch das Verstellen von entgegen der Transportrichtung der Transportbahn weisenden Fingerelementen von der unteren Stellung in die obere Stellung, insbesondere gegenüber anderen angrenzenden Stückgütern, abgebremst werden. Die Beschleunigung der Stückgüter kann einfach dadurch erfolgen, dass die Fingerelemente, insbesondere die freien Enden der Fingerelemente, des hinteren Endes der Stückgüter gegenüber dem vorderen Ende der Stückgüter anheben. Infolge der auf die Stückgüter wirkenden Gewichtskraft werden diese in die Transportrichtung der Transportbahn beschleunigt, während die Stückgüter vom Fingerelement in Transportrichtung hinuntergleiten. Das Abbremsen kann dabei erfolgen, indem die Fingerelemente, insbesondere die freien Enden der Fingerelemente den vorderen Teil der Stückgüter gegenüber dem hinteren Teil der Stückgüter anheben. Die Stückgüter müssen folglich über die freien Enden der Fingerelemente gelangen, wobei sie Geschwindigkeit einbüßen. Zudem können die Stückgüter dabei noch an einer Seite angehoben werden, was dazu führen kann, dass die Stückgüter zusätzlich zu einer Beschleunigung oder einem Abbremsen noch etwas zu der Seite rutschen, die der von den Fingerelement angehobenen Seite gegenüberliegt.

Alternativ oder zusätzlich können auch quer zur Transportrichtung der Stückgüter bzw. quer zur Transportbahn ausgerichtete Fingerelemente von einer unteren Stellung in eine obere Stellung verstellt werden. Die Bewegungsrichtungen der von den Fingerelementen wenigstens teilweise angehobenen Stückgüter werden dabei so manipuliert, dass einzelnen Stückgütern, insbesondere gegenüber anderen angrenzenden Stückgütern, eine Bewegungskomponente in einer Richtung quer zur Transportrichtung der Stückgüter bzw. quer zur Transportbahn aufgeprägt wird. Wenn die Fingerelemente zudem in entgegengesetzte Richtungen quer zur Transportrichtung der Stückgüter bzw. quer zur Transportbahn ausgerichtet sind, können den Stückgütern Bewegungskomponenten zu entgegengesetzten Seiten der Transportbahn bzw. quer zur Transportbahn oder quer zur Transportrichtung der Stückgüter aufgeprägt werden, wodurch eine entsprechende Manipulierung und Vereinzelung der Stückgüter erreicht werden kann.

Die Fingerelemente der Transportbahn können vorzugsweise unabhängig voneinander in die obere Stellung und zurück verstellt werden, so dass wenigstens zeitweise einige Fingerelemente in der oberen und einige, insbesondere in dieselbe Richtung und/oder die entgegengesetzte Richtung weisende, Fingerelemente in der unteren Stellung angeordnet sind. Auf diese Weise werden letztlich unterschiedlichen Stückgütern auf der Transportbahn Bewegungskomponenten in unterschiedliche Richtungen und/oder keine zusätzliche Bewegungskomponente aufgeprägt. So kann sehr schnell und auf kurzen Wegen eine Vereinzelung der Stückgüter erreicht werden.

Werden mit wenigstens einem, insbesondere optischen, Sensor wenigstens einzelne zu vereinzelnde Stückgüter auf der Transportbahn erfasst, kann deren Lage zueinander, Anordnung, Größe, Form und dergleichen bestimmt werden. Von diesen Parametern, bedarfsweise auch weiteren Parametern, hängt ab, wie die Stückgüter einfach, gezielt und schnell vereinzelt werden können. Es kann also beispielsweise wenigstens eine Steuereinrichtung vorgesehen werden, die anhand der von dem wenigstens einen Sensor erfassten Parameter ein geeignetes Verstellen wenigstens einzelner von den zu vereinzelnden Stückgütern zu passierenden Fingerelementen zum Vereinzeln der Stückgüter ermittelt. Dieses als geeignet erkannte Verstellen der Fingerelemente kann dann angewendet werden, um die Stückgüter entsprechend zu vereinzeln.

Zu diesem Zweck ist es verfahrensmäßig günstig, wenn die Steuereinrichtung entsprechende Signale an wenigstens eine Stelleinrichtung zur Verstellung der Fingerelemente sendet, um die Fingerelemente so zu verstellen, dass die zu vereinzelnden Stückgüter vereinzelt werden. Die Stelleinrichtung kann dabei das Verstellen der einzelnen Fingerelemente vorgeben bzw. Antriebseinrichtungen zum Verstellen der Fingerelemente ansteuern, die das Verstellen der Fingerelemente mechanisch bewirken.

Durch das Verstellen von Fingerelementen in eine obere Stellung können beispielsweise Stückgüter von einer Transportbahn nach oben auf eine andere darüber liegende Transportbahn geleitet werden. Es kann aber auch vorgesehen sein, dass Stückgüter durch ein Verstellen der Fingerelemente in eine untere Stellung von einer Transporteinrichtung auf eine andere darunter liegende Transportbahn geleitet werden. Eventuell werden Fingerelemente aber auch in eine Stellung gebracht, in der die Stückgüter weiter entlang derselben Transportbahn geleitet werden. Die zusätzlichen Transportbahnen können dann bedarfsweise nach demselben Prinzip wie die ersten Transportbahnen ausgebildet sein und betrieben werden. So können mehrere Transportbahnen zum Vereinzeln und bedarfsweise ebenfalls zum Sortieren bereitgestellt und entsprechend genutzt werden.

Verfahrensmäßig können die Stückgüter also auf den wenigstens zwei Transportbahnen durch das wiederholte Verstellen von Fingerelementen der jeweiligen Transportbahn aus der unteren Stellung in die obere Stellung entlang der jeweiligen Transportbahn und/oder quer zur jeweiligen Transportbahn vereinzelt werden. Dies funktioniert bevorzugt nach denselben Prinzipien und Mechanismen, die zuvor bereits beschrieben worden sind.

Der Singulationsförderer kann alternativ oder zusätzlich zum Vereinzeln von Stückgütern auch zum Sortieren von Stückgütern eingesetzt werden. Die Stückgüter können dabei durch das wiederholte Verstellen von Fingerelementen der jeweiligen Transportbahn aus der unteren Stellung in die obere Stellung entlang der jeweiligen Transportbahn und/oder quer zur jeweiligen Transportbahn in unterschiedlicher Weise zu wenigstens einer Seite der Transportbahn bewegt werden. Dies kann bereits das Sortieren darstellen. Es kann aber auch vorgesehen sein, dass die Stückgüter an vorgegebenen Stellen zu wenigstens einer Seite von der Transportbahn herunter bewegt, insbesondere von der Transportbahn, etwa in Rutschen, abgeworfen, werden. So können beispielsweise Stückgüter derselben Kategorie an denselben Stellen von der Transportbahn herunterbewegt und anschließend in geeigneter Weise aufgefangen oder weitertransportiert werden.

Nachfolgend wird die Erfindung anhand einer lediglich Ausführungsbeispiele darstellenden Zeichnung näher erläutert. In der Zeichnung zeigt
- Fig. 1: einen Teil einer Transportbahn eines erfindungsgemäßen Singulationsförderers in einer schematischen Draufsicht,
- Fig. 2: ein erstes Fingerelement einer Transportbahn eines erfindungsgemäßen Singulationsförderers in einer perspektivischen Seitenansicht,
- Fig. 3A-C: die Verstellung des Fingerelements aus Fig. 2 in einer perspektivischen Seitenansicht,
- Fig. 4: ein zweites Fingerelement einer Transportbahn eines erfindungsgemäßen Singulationsförderers in einer perspektivischen Seitenansicht,
- Fig. 5A-B: ein Fingerelement der Transportbahn aus Fig. 1 in einer Seitenansicht und einer perspektivischen Ansicht,
- Fig. 6A-B: ein alternatives Fingerelement der Transportbahn aus Fig. 1 in einer Seitenansicht und einer perspektivischen Ansicht,
- Fig. 7A-B: die Funktion eines ersten Abschnitts der Transportbahn aus Fig. 1 in einer schematischen Seitenansicht,
- Fig. 8A-B: die Funktion eines zweiten Abschnitts der Transportbahn aus Fig. 1 in einer schematischen Seitenansicht,
- Fig. 9A-B: die Funktion eines dritten Ausschnitts der Transportbahn aus Fig. 1 in einer schematischen Seitenansicht,
- Fig. 10A-B: zwei unterschiedliche Anordnungen von Fingerelementen gemäß Fig. 6 in einer perspektivischen Ansicht,
- Fig. 11: einen alternativen Singulationsförderer mit teilweise übereinander angeordneten Transportbahnen in einer schematischen Seitenansicht und
- Fig. 12: das Sortieren von Stückgütern entlang einer Transportbahn in einer schematischen Draufsicht.

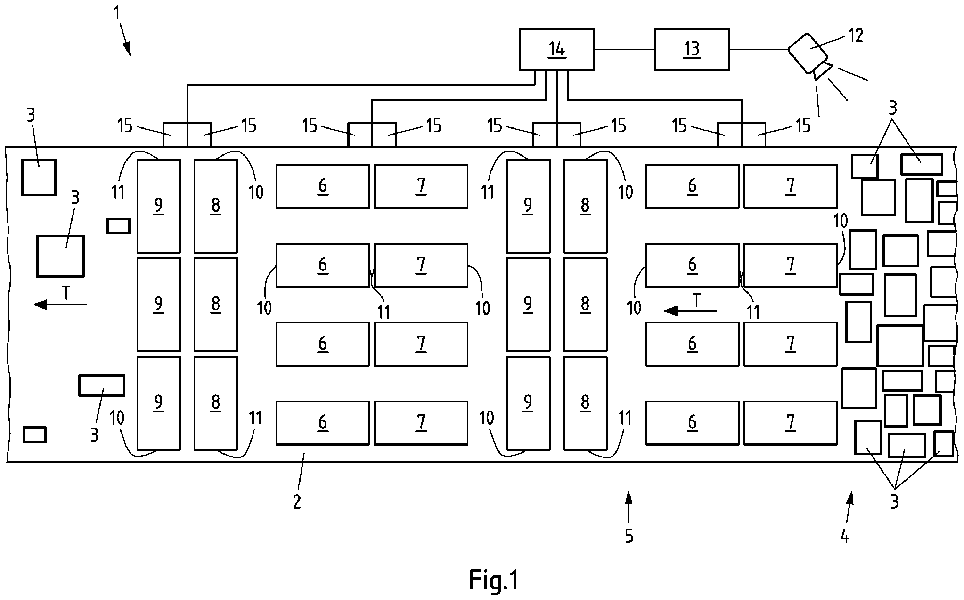

In der Fig. 1 ist ein Teil eines Singulationsförderers 1 umfassend eine Transportbahn 2 in schematischer Draufsicht dargestellt. Die Transportbahn 2 ist wenigstens im dargestellten Umfang geradlinig ausgerichtet, was jedoch nicht zwingend der Fall sein müsste. Bei dem dargestellten und insoweit bevorzugten Teil einer Transportbahn 2 ist sowohl die Längserstreckung der Transportbahn 2 als auch die Transportrichtung T der entlang der Transportbahn 2 geförderten und vereinzelten Stückgüter 3 geradlinig von rechts nach links gerichtet. Die Stückgüter 3 sind der besseren Anschaulichkeit und Verständlichkeit halber lediglich schematisch als Pulk 4 auf der rechten Seite und nach dem wenigstens teilweisen Vereinzeln voneinander beabstandet auf der linken Seite der Fig. 1 dargestellt. Zwischen diesen beiden Positionen werden die Stückgüter 3 entlang des als Rollenförderers 5 ausgebildeten Singulationsförderers 1 transportiert. In dem Rollenförderer 5, welcher die Transportbahn 2 bildet, auf der die Stückgüter 3 gefördert werden, sind einzelne Fingerelemente 6,7,8,9 integriert. Die Fingerelemente 6,7,8,9 sind in unterschiedlicher Ausrichtung vorgesehen, so gibt es Fingerelemente 6,7, die parallel zur Transportrichtung T der Stückgüter 3 ausgerichtet sind, und Fingerelemente 8,9 die quer zur Transportrichtung T der Stückgüter 3 ausgerichtet sind. Dazwischen weist die Transportbahn 2 nicht dargestellte Rollen des Rollenförderers 5 auf, die für einen im Wesentlichen ungehinderten Transport der Stückgüter 3 sorgen.

Die Fingerelemente 6,7,8,9 weisen in Längsrichtung jeweils ein mit dem Rollenförderer 5 fest verbundenes Ende 10 und ein freies Ende 11 auf, das sich von einer unteren Position in eine obere Position und wieder zurück verstellen lässt. Mit dem freien Ende 11 in der oberen Position befindet sich das Fingerelement 6,7,8,9 in einer oberen Stellung, während sich das Fingerelement 6,7,8,9 mit dem freien Ende 11 in der unteren Position in einer unteren Stellung befindet. Bei dem dargestellten Singulationsförderer 1 sind Fingerelemente 6 vorgesehen, deren freies Ende 11 in die Transportrichtung T weist, während die freien Enden 11 anderer Fingerelemente 7 entgegen die Transportrichtung T weisen. Ebenso sind Fingerelemente 8 vorgesehen, die zu dem in Transportrichtung T der Stückgüter 3 gesehen rechten Rand der Transportbahn 2 weisen, während die freien Enden 11 anderer Fingerelemente 9 in Transportrichtung T der Stückgüter 3 gesehen in Richtung des linken Rands der Transportbahn 2 weisen. Die Anordnung und das wiederholte Verstellen der Fingerelemente 6,7,8,9 in die obere Stellung und wieder zurück sorgt zusammen mit dem Transport der Stückgüter 3 in Transportrichtung T entlang der Transportbahn 2 zu einem Vereinzeln der Stückgüter 3, die vorher als Pulk 4 dem Singulationsförderer 1 zugeführt werden, etwa indem die Stückgüter 3 gemeinsam auf den Singulationsförderer 1 gekippt werden.

Für eine zielgerichtete Vereinzelung der Stückgüter 3, die bevorzugt aber nicht zwingend erforderlich ist, ist ein optischer Sensor 12 vorgesehen, der die zu vereinzelnden bzw. die bereits teilweise vereinzelten und noch weiter zu vereinzelnden Stückgüter 3 erfasst. Erfasst wird beispielsweise die Form des Haufens oder Pulks 4 der Stückgüter 3, deren Art, Form und/oder Größe. Es kann auch die Art und die Lage der einzelnen Stückgüter 3 zueinander erfasst werden. Nicht dargestellt aber denkbar ist es, mehrere Sensoren 12 zum Erfassen der Stückgüter 3 an unterschiedlichen Stellen der Transportbahn 2 vorzusehen, so dass das nachfolgende Vereinzeln vom vorhergehenden Vereinzeln abhängig gemacht werden kann. Von dem wenigstens einen Sensor 12 wird wenigstens ein Parameter an eine Steuereinrichtung 13 übergeben. Diese ermittelt, welche Verstellung der von den Stückgütern 3 zu passierenden Fingerelemente 6,7,8,9 geeignet ist, um die Stückgüter 3 schnell und auf kurzen Wegen weiter zu vereinzeln. Die Steuereinrichtung 13 gibt dann ein entsprechendes Signal an eine Stelleinrichtung 14 ab, die die den Fingerelementen 6,7,8,9 zugeordneten Antriebseinrichtungen 15 ansteuert. Dabei ist eine bauliche Trennung in Sensor 12, Steuereinrichtung 13, Stelleinrichtung 14 und Antriebseinrichtung 15 nicht erforderlich. Es können die vorgenannten Baugruppen auch wenigstens teilweise zusammengefasst sein.

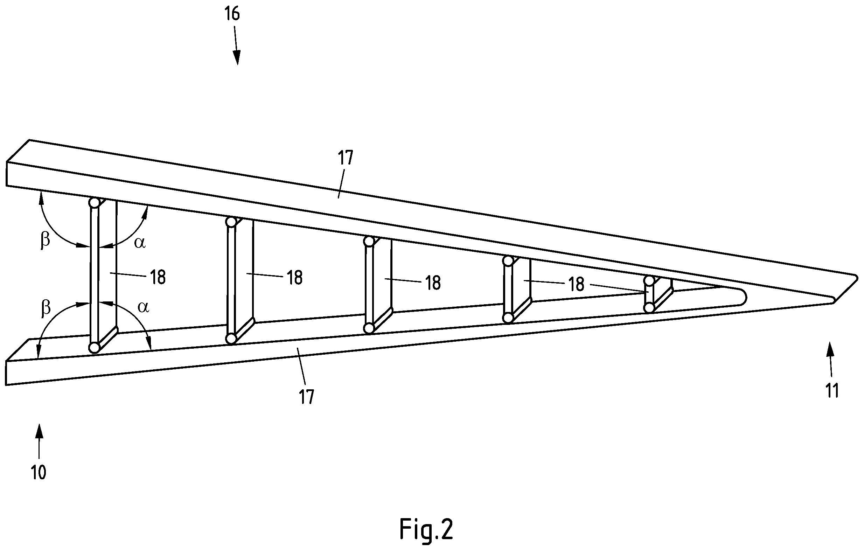

In der Fig. 2 ist ein mögliches Fingerelement 16 eines Singulationsförderers 1 dargestellt. Das Fingerelement 16 umfasst zwei Flankenelemente 17, die bei dem dargestellten und insoweit bevorzugten Fingerelement 16 gemeinsam von einem links dargestellten, mit der Transportbahn 2 verbundenen Ende 10 des Fingerelements 16 zum gegenüberliegenden, rechts dargestellten freien Ende 11 des Fingerelements 16 verlaufen. Dabei nähern sich die Flankenelemente 17 in Richtung des freien Endes 11 kontinuierlich einander an, bis die Flankenelemente 17 beim dargestellten und insoweit bevorzugten Fingerelement 16 am freien Ende 11 des Fingerelements 16 ineinander übergehen. Daher wird ein sich in eine Richtung verjüngendes, konisch zulaufendes Fingerelement 16 erhalten. Zwischen den Flankenelementen 17 sind über die Länge des Fingerelements 16 verteilt Stege 18 vorgesehen, über die die Flankenelemente 17 miteinander verbunden sind. Bei dem dargestellten und insoweit bevorzugten Fingerelement 16 sind die Stege 18 an den gegenüberliegenden Enden jeweils schwenkbar, insbesondere gelenkig, mit den Flankenelementen 17 verbunden. Alternativ könnten die Stege 18 flexibel ausgebildet sein, um eine Bewegung der Stege 18 gegenüber den Flankenelementen 17 zu ermöglichen. Die Stege 18 sind bei dem dargestellten und insoweit bevorzugten Fingerelement 16 in gleichmäßigen Abständen über die Länge des Fingerelements 16 verteilt. Dies ist jedoch nicht zwingend erforderlich. Auch ist es lediglich der Einfachheit halber bevorzugt, dass die Stege 18 parallel zueinander verlaufen. Besonders zweckmäßig ist es jedoch, dass die Stege 18 mit jedem der Flankenelemente 16 auf einer Seite einen spitzen Winkel α und auf der gegenüberliegenden Seite einen stumpfen Winkel β bilden.

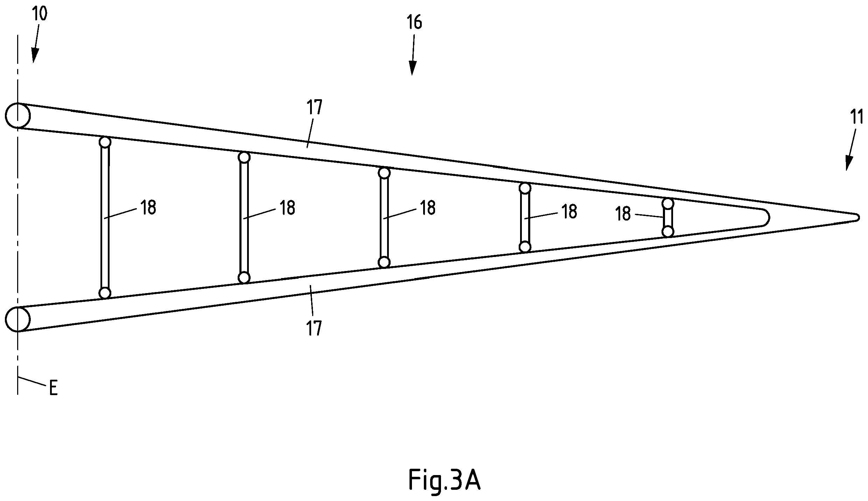

Die dargestellten und insoweit bevorzugten Flankenelemente 17 sind flexibel ausgebildet, so dass sich die Flankenelemente 17 biegen lassen, wobei sich das Fingerelement 16 mehr oder weniger krümmt, was insbesondere in den Fig. 3A-C dargestellt ist. Durch das Krümmen der Fingerelemente 16 einer Leiteinrichtung werden die freien Enden der Fingerelemente insbesondere nach oben oder unten bewegt. Dies führt letztlich zu einer Höhenverstellung der Fingerelemente insgesamt, auch wenn diese an einem Ende fest mit der Rutsche oder der Leiteinrichtung verbunden sein können. Die Flankenelemente können dazu beispielsweise aus einem Metall oder einem Kunststoff gebildet werden. Gleiches gilt für die Stege, die jedoch nicht flexibel ausgebildet sein müssen.

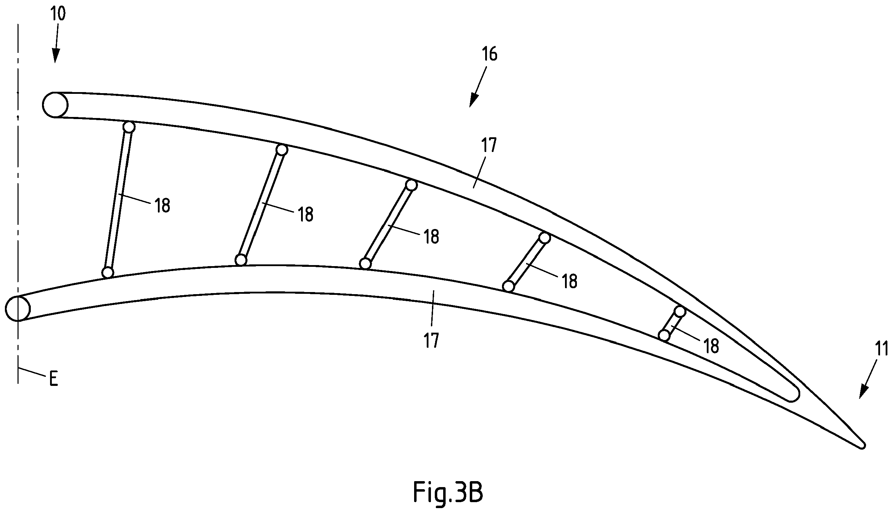

In der Fig. 3A ist das Fingerelement 16 aus Fig. 2 in einer gestreckten Ausrichtung dargestellt, bei der die Enden der Flankenelemente 17 in einer Ebene E angeordnet sind. Bei dem dargestellten und insoweit bevorzugten Fingerelement 16 sind die Flankenelemente 17 in dieser Stellung wenigstens im Wesentlichen symmetrisch zueinander ausgebildet. Wird gemäß Fig. 3B das obere Flankenelement 17 gegenüber der Ebene E in Richtung des freien Endes des Fingerelements 16 verschoben, so krümmt sich das Fingerelement 16 nach unten. Anders ausgedrückt, wird das Fingerelement 16 nach unten verstellt, wobei ein Fingerelement 16 bedarfsweise auch ohne eine Krümmung desselben, vorzugsweise insgesamt, nach unten oder oben verstellt werden kann. Die Krümmung des dargestellten und insoweit bevorzugten Fingerelements 16 ergibt sich infolge der Flexibilität der Flankenelemente 17 und der schwenkbaren Verbindungen zwischen den Flankenelementen 17 und den dazwischen vorgesehenen Stegen 18. Dabei ist zu beachten, dass die Flankenelemente 17 nicht zwingend über ihre gesamte Längserstreckung flexibel ausgebildet sein müssen, auch wenn dies oftmals bevorzugt sein wird. Es ist auch denkbar, dass die Flankenelemente starre Abschnitte aufweisen die miteinander schwenkbar, insbesondere gelenkig, vorzugsweise durch ein Scharnier, verbunden sind. Dabei sollten entsprechende Flankenelemente zwischen zwei Stegen wenigstens eine Schwenkverbindung aufweisen.

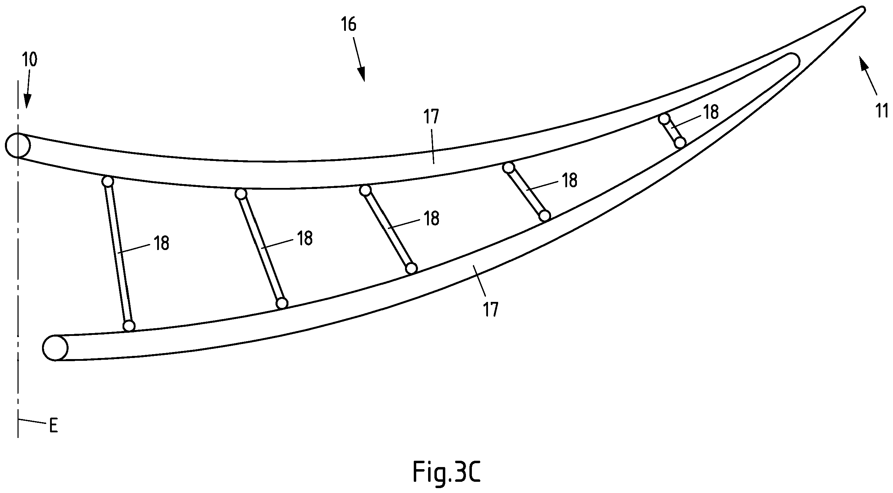

Das Fingerelement 16 krümmt sich gemäß Fig. 3C in analoger Weise nach oben, wenn das untere Flankenelement 17 gegenüber der Ebene E nach vorne in Richtung des freien Endes 11 des Fingerelements 16 verschoben wird. Auf diese Weise kann also ein Verstellen des freien Endes 11 des Fingerelements 16 als auch ein Verstellen des Fingerelements 16 jeweils nach unten erreicht werden.

Den Fig. 3A-C kann ferner entnommen werden, dass die Stege 18 zwischen den Flankenelementen 17 sich beim Krümmen des Fingerelements 16 in entgegengesetzte Richtungen neigen, wenn das Fingerelement 16 nach oben und nach unten verstellt wird. Zum Verstellen der Flankenelemente 16 analog zu den Fig. 3A-C kann eine nicht dargestellte Antriebseinrichtung 15 vorgesehen sein. Dabei sind geeignete Antriebseinrichtungen 15, wie etwa Linearantriebe aus dem Stand der Technik bekannt. Nicht dargestellt ist zudem, dass mehr als zwei, beispielsweise wenigstens drei oder vier, Flankenelemente vorgesehen sein können, etwa um das Fingerelement beispielsweise nicht nur rauf und runter, sondern auch zur Seite zu verstellen. Der Einfachheit halber sind diese dann, insbesondere gleichmäßig, verteilt um eine Längsachse der Fingereinheit angeordnet. Die mehreren Flankenelemente können dann, insbesondere mit freien Enden, in einer gemeinsamen Spitze der Fingereinheit zusammenlaufen. Zudem oder alternativ können die Stege vorzugsweise jeweils alle Flankenelemente miteinander verbinden. Die dargestellten und insoweit bevorzugten Flankenelemente sind streifenförmig ausgebildet. Es wäre aber auch eine plattenförmige oder stabförmige Ausgestaltung der Flankenelemente möglich, solange die Flankenelemente ein gegenseitiges Verschieben und Krümmen der Flankenelemente ermöglichen.

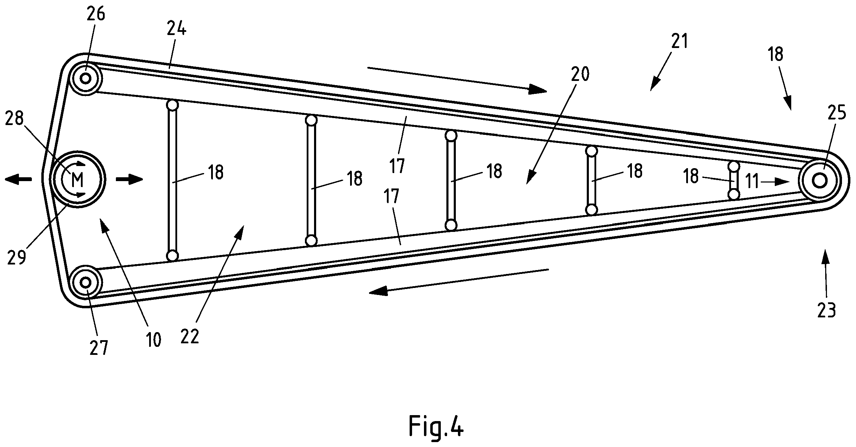

In der Fig. 4 ist ein Fingerelement 20 als Teil oder in Form eines Gurtförderers 21 dargestellt, wobei das Fingerelement 20 beim dargestellten und insoweit bevorzugten Ausführungsbeispiel die Tragstruktur 22 des Gurtförderers 21 bildet. Das Fingerelement 20 ist dabei prinzipiell analog zu dem in der Fig. 1 dargestellten Fingerelement 16 ausgebildet. Daher kann der Gurtförderer 21, insbesondere das freie Ende 23 des Gurtförderers 21, nach oben und nach unten verstellt werden. Der um das Fingerelement 20 längs der Flankenelemente 17 umlaufende Gurt 24 folgt dabei der Verstellung, insbesondere der Krümmung des Fingerelements 20 nach oben und nach unten. Der Gurt 24 läuft dabei endlos um die Tragstruktur 22 und damit um die Fingereinheit 20 herum. Dazu weist das dargestellte und insoweit bevorzugte Fingerelement 20 mehrere Umlenkungen in Form von Umlenkrollen 25,26,27 auf. Eine Umlenkrolle 25 ist am freien Ende 11 des Fingerelements 20 und jeweils eine weitere Umlenkrolle 26,27 an den gegenüberliegenden Enden der Flankenelemente 17. Die Umlenkrollen 25,26,27 werden dabei von der Tragstruktur 22 des Fingerelements 20 getragen. Damit der Gurt 24 bedarfsweise auch im Falle eines gekrümmten Fingerelements 20 nahe an dem oberen Flankenelement 17 oder an beiden Flankenelementen 17 geführt wird, kann der Gurt 24 über geeignete Verbindungsmittel an wenigstens einer Stelle an wenigstens dem oberen Flankenelement 17 gehalten werden.

Der Gurt 24 des Fingerelements 20 kann durch die Gewichtskraft eines sich auf dem Fingerelement 20 befindenden Stückguts 3 angetrieben werden, um den Transport des Stückguts 3 entlang des Fingerelements 20 zu verbessern. Es kann aber auch ein motorischer Antrieb des Gurtes 24 vorgesehen sein, um den Gurt 24 zwangsweise anzutreiben. Der Gurt 24 bewegt sich dabei entweder an der Oberseite des Fingerelements 20 in Richtung des freien Endes 11 des Fingerelements 20 oder in die entgegengesetzte Richtung. Um ein Stückgut 3 abzubremsen, können der Antrieb und der Gurt 24 dazu ausgebildet sein, den Gurt 24 langsamer als die ursprüngliche Geschwindigkeit des Stückguts 2 oder gar in die entgegengesetzte Richtung anzutreiben. Der Antrieb 28 wirkt über eine Antriebsrolle 29, die bedarfsweise zum Spannen des Gurts 24 beispielsweise in Längsrichtung des Fingerelements 20 verstellt werden kann, auf den Gurt 24. Zudem können für einen möglichst schlupffreien Antrieb des Gurts 24 am Gurt 24 und an der Antriebsrolle 29 korrespondierende Verzahnungen vorgesehen sein, die miteinander kämmen. Anders als in der Fig. 4 dargestellt, kann die Tragstruktur des Fingerelements bedarfsweise noch weitere Bauteile aufweisen.

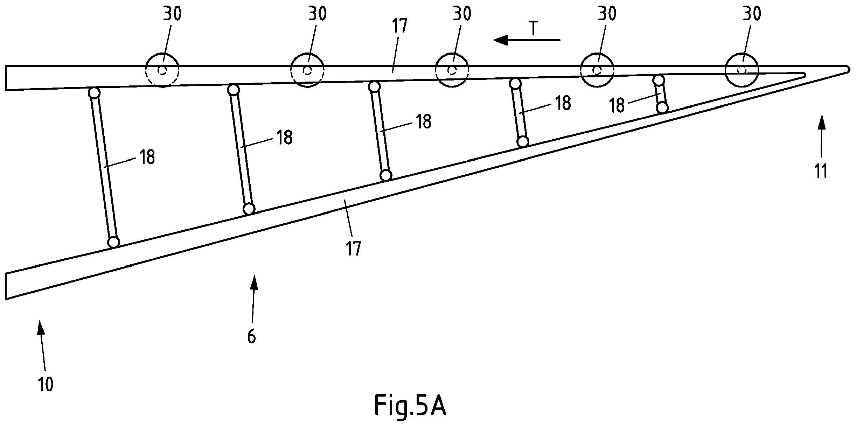

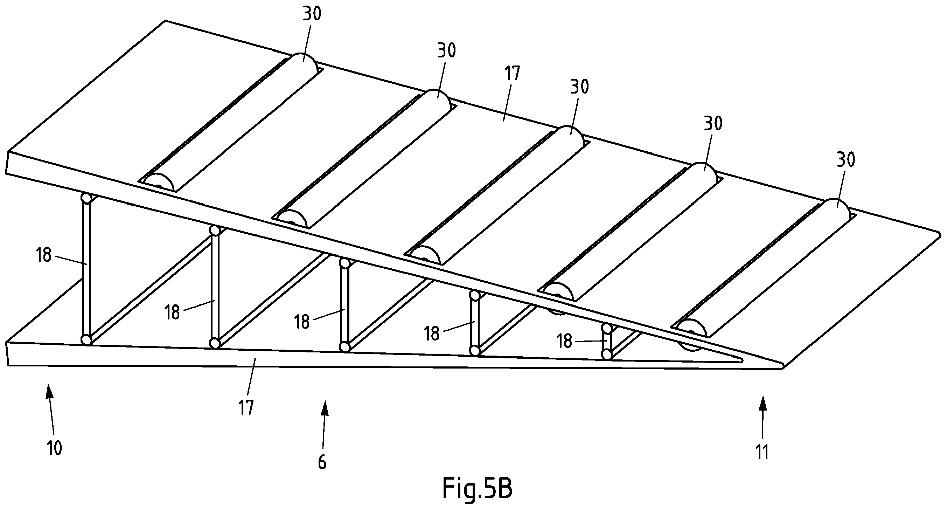

In der Fig. 5A-B ist ein Fingerelement 6 des Singulationsförderers 1 aus Fig. 1 dargestellt, das im Wesentlichen parallel zur Transportrichtung T der Stückgüter 3 und damit im Wesentlichen parallel zur Längserstreckung der Transportbahn 2 ausgerichtet ist. Dargestellt ist das Fingerelement 6 in einer gestreckten Stellung, in der die Flankenelemente 17 und damit das Fingerelement 6 selbst weder nach oben noch nach unten gebogen bzw. gekrümmt ist. Ein Biegen oder Krümmen wenigstens nach oben in eine obere Stellung mit dem freien Ende 11 in der oberen Position ist aber ausgehend von der dargestellten Stellung, bei der es sich um die untere Stellung handeln kann aber nicht muss, ohne Weiteres möglich. Das Fingerelement 6 weist neben den flexiblen Flankenelementen 17und den dazwischen vorgesehenen Stegen 18 noch entlang des oberen Flankenelements 17 verteilte Rollen 30 auf. Die Drehachsen der Rollen 30 sind quer zur Längserstreckung des Fingerelements 6 ausgerichtet. Damit sind die Drehachsen der Rollen 30 auch quer zur Transportrichtung T der Stückgüter 3 ausgerichtet, weshalb die Rollen 30 der Fingerelemente 6 den Transport der Stückgüter 3 in Transportrichtung T unterstützen. Bei dargestellten und insoweit bevorzugten Fingerelement 6 ist jeweils zwischen zwei Stegen 18 eine Rolle 30 vorgesehen, deren Durchmesser so bemessen ist, dass die Rollen 30 das Krümmen des Fingerelements 6 nicht behindern. Die Fingerelemente 7 sind gleichartig zu den Fingerelementen 6 ausgebildet, aber in entgegengesetzter Richtung angeordnet.

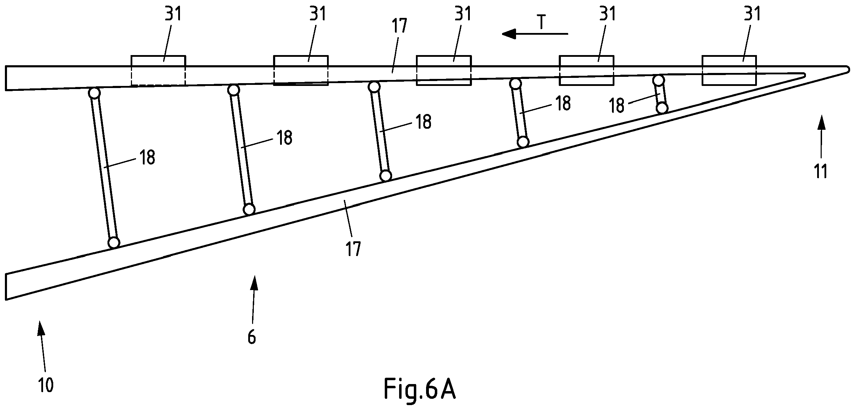

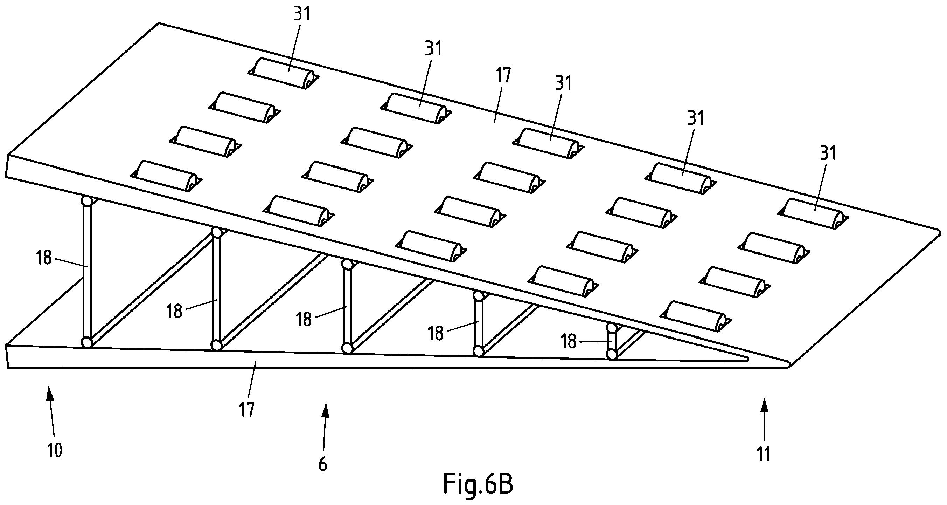

In der Fig. 6A-B ist ein Fingerelement 8 aus der Fig. 1 dargestellt, bei dem ebenfalls Rollen 31 an dem oberen Flankenelement 17 vorgesehen sind. Die Drehachsen der Rollen 31 sind jedoch in Längsrichtung des Fingerelements 8 ausgerichtet. Dadurch wird der Transport der Stückgüter 3 in die Transportrichtung T der Stückgüter 3 und entlang der Transportbahn 2 begünstigt. Auch bei dem in der Fig. 6A-B dargestellten Fingerelement 8 ist zwischen jeweils zwei Stegen 18 wenigstens eine Rolle 31 vorgesehen. Tatsächlich sind in Querrichtung zum Fingerelement 8 zwischen zwei Stegen 18 jeweils mehrere Rollen 31 in einer Reihe vorgesehen, deren Durchmesser und deren Länge so gewählt sind, dass das Krümmen des Fingerelements 8 nicht beeinträchtigt wird. Die Fingerelemente 9 sind gleichartig zu den Fingerelementen 8 ausgebildet, aber in entgegengesetzter Richtung angeordnet.

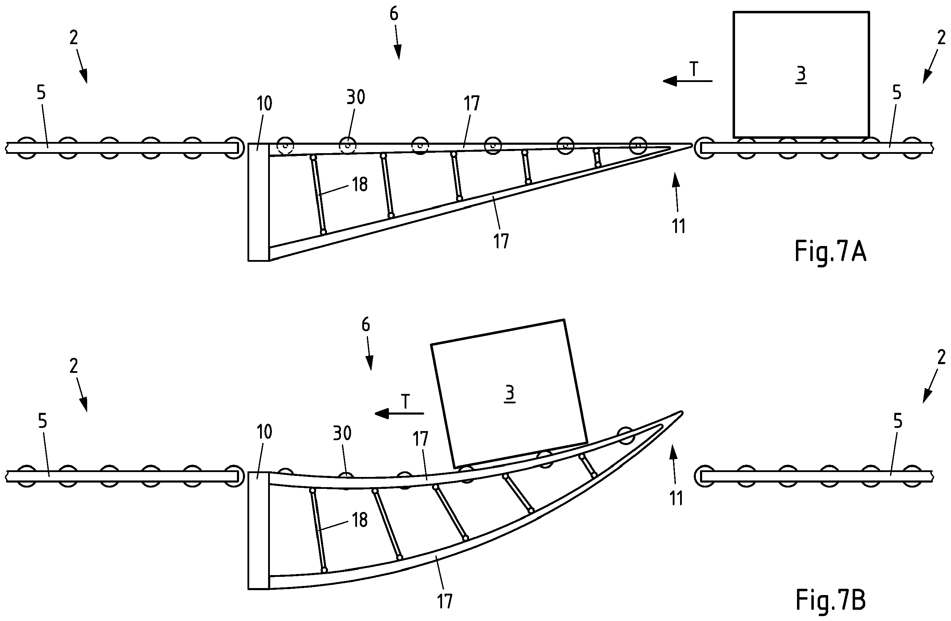

In den Fig. 7A-B ist die Manipulation der Bewegung der Stückgüter 3 durch ein in die Transportrichtung T weisendes Fingerelement 6 des Singulationsförderers 1 dargestellt. Zunächst wird, wie dies in der Fig. 7A dargestellt ist, ein Stückgut 3 in Transportrichtung T entlang der Transportbahn 2 herantransportiert, wobei das Fingerelement 6 eine gereckte Stellung einnimmt. Anschließend gelangt das Stückgut 3 auf das Fingerelement 6, das dann in die obere Stellung verstellt wird, in dem das Fingerelement 6 gekrümmt und das freie Ende 11 des Fingerelements 6 in die obere Position verstellt ist, wie dies in der Fig. 7B dargestellt ist. Das Stückgut 3 gleitet das gekrümmte Fingerelement 6 infolge der Schwerkraft schneller hinunter, als es ohne die Krümmung entlang des Fingerelements 6 gleiten würde. Im Ergebnis wird das Stückgut 3 also in die Transportrichtung T des Stückguts 3 beschleunigt, und zwar vorzugsweise absolut aber auch relativ zu anderen Stückgütern 3 auf der Transportbahn 2. Anders ausgedrückt wird dem Stückgut 3 eine Bewegungskomponente in die Transportrichtung T aufgeprägt, die sich mit der gleichgerichteten Bewegungsrichtung des Stückguts 3 überlagert und zu einer Beschleunigung und einer zeitweisen Vergrößerung der Transportgeschwindigkeit führt.

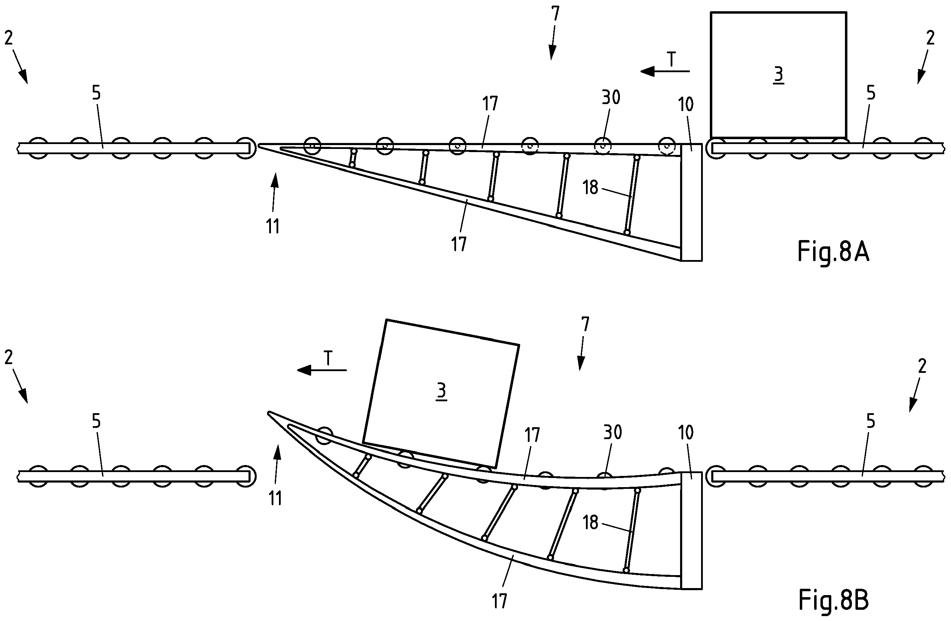

In den Fig. 8A-B ist die entgegengesetzte Manipulation der Bewegung eines Stückguts 3 durch ein im Wesentlichen parallel zur Transportrichtung T ausgerichtetes Fingerelement 7 des Singulationsförderers 1 dargestellt. Das Fingerelement 7 ist dabei vom ortsfesten Ende 10 zum freien Ende 11 gesehen im Wesentlichen entgegen der Transportrichtung T ausgerichtet. Zunächst befindet sich das Fingerelement 7, wie dies in der Fig. 8A dargestellt ist, in einer gestreckten Stellung und wird das Stückgut 3 zum Fingerelement 7 gefördert. Anschließend wird das Fingerelement 7 in die obere Stellung verstellt, wobei das freie Ende des Fingerelements 7 in die obere Position verstellt wird, wie dies in der Fig. 8B dargestellt ist. Der Transport des Stückguts 3 in Transportrichtung T wird damit behindert, wenn auch nicht verhindert. Das Stückgut 3 passiert das angehobene freie Ende 11 des Fingerelements 7 und wird dabei etwas abgebremst, verglichen mit anderen Stückgütern 3, welche geradlinig transportiert und nicht durch ein Fingerelement 7 angehoben werden.

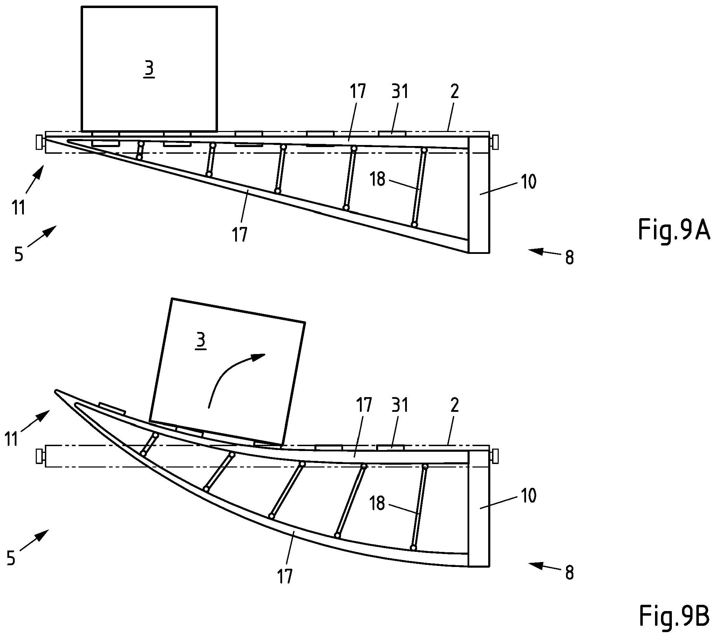

In den Fig. 9A-B ist dargestellt, wie die Bewegungsrichtung eines Stückguts 3 durch ein Fingerelement 8 des Singulationsförderers 1 manipuliert wird, das quer zur Transportrichtung T bzw. zur Transportbahn 2 ausgerichtet ist. Auch in diesem Fall wird das Stückgut 3 zunächst zum Fingerelement 8 transportiert, wie dies in der Fig. 9A dargestellt ist. Wenn das Stückgut 3 wenigstens teilweise auf dem Fingerelement 8 angeordnet ist, wird das Fingerelement 8 gekrümmt, wobei sich das freie Ende 11 des Fingerelements 8 in die obere Position verstellt, wie dies in der Fig. 9B dargestellt ist. Das Fingerelement 8 befindet sich in der dargestellten oberen Stellung, in der das Fingerelement 8 dem Stückgut 3 infolge der Gewichtskraft eine Bewegungskomponente nach rechts aufprägt. Durch ein Fingerelement 8, dessen freies Ende 11 in die entgegengesetzte Richtung weist, könnte einem Stückgut 3 auf dieselbe Weise eine Bewegungskomponente nach links aufgeprägt werden. Ohne eine Krümmung entsprechender Fingerelemente 8 können diese von Stückgütern 3 geradlinig passiert werden, ohne dass den Stückgütern 3 eine Bewegungskomponente nach links oder rechts wie beschrieben aufgeprägt wird. Es erfolgt letztlich keine Manipulation der Bewegungsrichtung der entsprechenden Stückgüter 3, was auch der Vereinzelung gegenüber anderen Stückgütern 3 dienen kann.

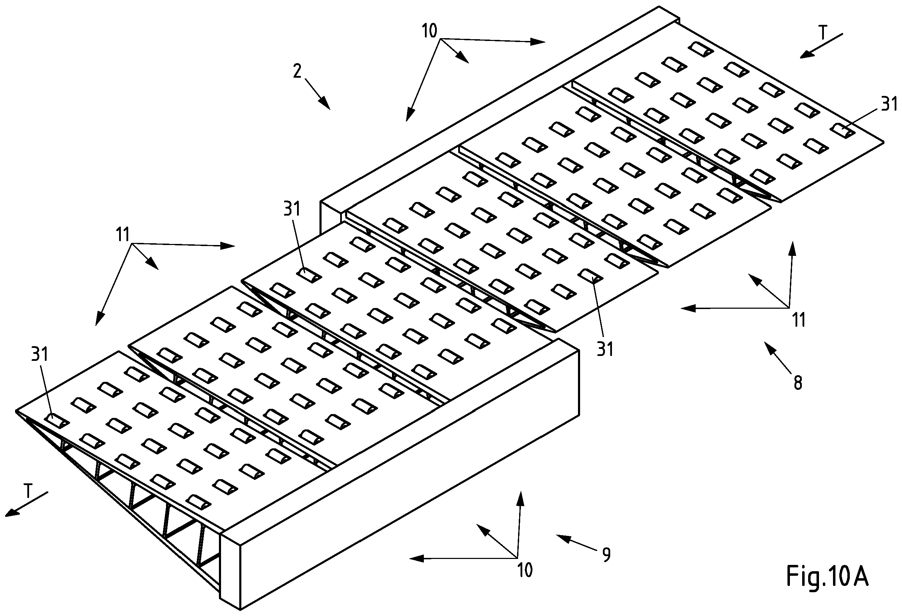

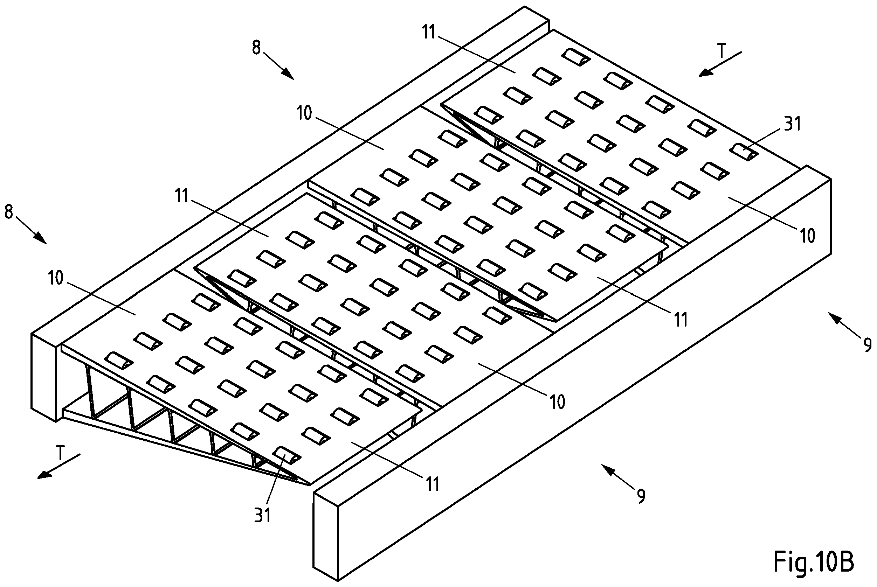

Die quer zur Transportbahn 2 und entgegengesetzt zueinander ausgerichteten Fingerelemente 8,9 können in unterschiedlicher Weise angeordnet werden. Zwei unterschiedliche Arten der Anordnung sind in der Fig. 10A-B dargestellt. Im ersten Fall sind mehrere in dieselbe Richtung weisende Fingerelemente 8 nebeneinander vorgesehen. Diesen Fingerelementen 8 folgen dann ebenfalls nebeneinander angeordnete Fingerelemente 9, die mit ihren freien Enden 11 jedoch in die entgegengesetzte Richtung verglichen mit den anderen Fingerelementen 8 weisen. Die eine Gruppe von Fingerelementen 8 kann eine Bewegung der Stückgüter 3 zur einen Seite der Transportbahn 2 und die andere Gruppe von Fingerelementen 9 eine Bewegung der Stückgüter 3 zur anderen Seite der Transportbahn 2 bewirken. Da es typischerweise weniger Sinn ergeben wird, bestimmte Stückgüter 3 nacheinander in entgegengesetzte Richtungen zu bewegen, können die Fingerelemente 8,9 auch platzsparend zu einer Einheit zusammengeführt werden, die die Stückgüter 3 entweder nach links oder nach rechts bezogen auf die Transportrichtung T der Stückgüter 3 bewegt. Vom Prinzip sind aber auch andere Anordnungen der quer zur Transportbahn 2 ausgerichteten Fingerelemente 8,9 und/oder der parallel zur Transportrichtung T bzw. zur Transportbahn 2 ausgerichteten Fingerelemente 6,7 denkbar und möglich.

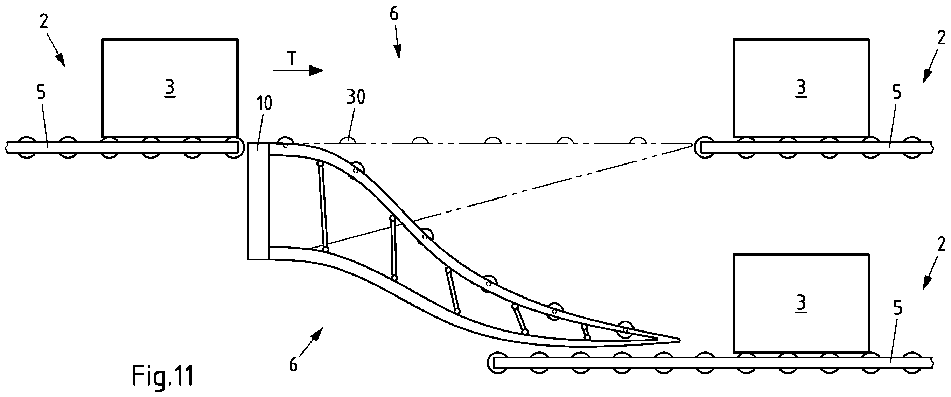

In der Fig. 11 ist schematisch ein Singulationsförderer 1 mit zwei teilweise übereinander angeordneten Transportbahnen 2 dargestellt. Um ein Stückgut 3 von der oberen Transportbahn 2 auf die darunter angeordnete Transportbahn 2 zu fördern, kann wenigstens ein Fingerelement 6 in eine untere Stellung verstellt werden. Das Stückgut gleitet dann entlang des wenigstens einen Fingerelements 6 nach unten auf die untere Transportbahn 2, wo eine weitere Vereinzelung der Stückgüter 3 stattfinden kann.

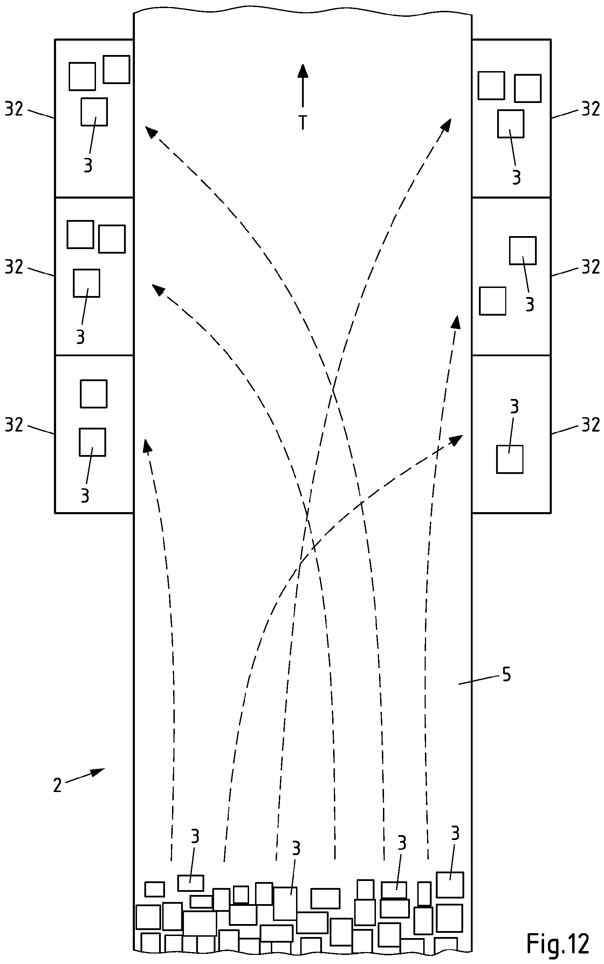

In der Fig. 12 ist schematisch die Sortierung der Stückgüter 3 entlang der Transportbahn 2 und das seitliche Abwerfen der sortierten Stückgüter 3 an dafür vorgesehenen Stellen dargestellt. Die Stückgüter 3 werden, wie dies bereits beschrieben worden ist, vereinzelt, aber so dass die Stückgüter 3 gleichzeitig sortiert werden. Die Stückgüter 3 werden dabei durch das Verstellen der Fingerelemente 6,7,8,9,16,20, die der besseren Übersichtlichkeit halber in der Fig. 12 nicht dargestellt sind, zu einer bestimmten Seite der Transportbahn 2 bewegt, und zwar derart, dass die Stückgüter 3 gleicher Kategorie an den dafür vorgesehenen Stellen seitlich von der Transportbahn 2 heruntergelangen und anschließend gesammelt in Auffangmitteln 32 oder direkt weiterverarbeitet werden. Die Sortierung der Stückgüter 3 ist der besseren Anschaulichkeit halber durch Pfeile dargestellt.

## Patentansprüche

1. Singulationsförderer (1) zum Fördern und Vereinzeln von Stückgut (3), insbesondere von Packstücken und/oder Sendungen, entlang wenigstens einer die Stückgüter (3) tragenden Transportbahn (2), wobei in der Transportbahn (2) abschnittsweise zwischen einer unteren Stellung und einer oberen Stellung verstellbare Fingerelemente (6,7,8,9,16,20) vorgesehen sind und wobei die freien Enden (11) der Fingerelemente (6,7,8,9,16,20) in der oberen Stellung derart in einer oberen Position oberhalb eines angrenzenden Bereichs der Transportbahn (2) angeordnet sind, um die Bewegungsrichtung und/oder die Bewegungsgeschwindigkeit jeweils einzelner Stückgüter (3) unabhängig von anderen Stückgütern (3) zu manipulieren,
**dadurch gekennzeichnet, dass** die Fingerelemente (6,7,8,9,16,20) jeweils wenigstens zwei sich gemeinsam in Längsrichtung des Fingerelements (6,7,8,9,16,20) bis wenigstens im Wesentlichen zum freien Ende des Fingerelements (6,7,8,9,16,20) erstreckende flexible Flankenelemente (17) aufweisen und dass die flexiblen Flankenelemente (17) in Längsrichtung der Fingerelemente (6,7,8,9,16,20) jeweils über eine Mehrzahl von Stegen (18) flexibel miteinander verbunden sind, so dass die freien Enden (11) der Fingerelemente (6,7,8,9,16,20) von einer unteren Stellung in eine obere Stellung und zurück verstellt werden können.

2. Singulationsförderer nach Anspruch 1,
**dadurch gekennzeichnet, dass** die Transportbahn (2) wenigstens angrenzend zu den Fingerelementen (6,7,8,9,16,20) und/oder wenigstens mit Ausnahme der Fingerelemente (6,7,8,9,16,20) durch wenigstens einen Rollenförderer (5), Riemenförderer und/oder Gurtförderer bereitgestellt wird.

3. Singulationsförderer nach Anspruch 1 oder 2,
**dadurch gekennzeichnet, dass** wenigstens einige Fingerelemente (6,7) in Richtung der freien Enden (11) wenigstens im Wesentlichen in die Transportrichtung (T) der Stückgüter (3) entlang der Transportbahn (2) und/oder wenigstens im Wesentlichen entgegen der Transportrichtung (T) der Stückgüter (3) entlang der Transportbahn (2) weisen und dass, vorzugsweise, die Breite wenigstens der wenigstens einigen Fingerelemente (6,7) quer zur Transportbahn (2) weniger als 50%, vorzugsweise weniger als 23%, insbesondere weniger als 18%, weiter insbesondere weniger als 10%, der Breite der Transportbahn (2) im Bereich der Fingerelemente (6,7) beträgt und/oder dass die Länge wenigstens der wenigstens einigen Fingerelemente (6,7) in Richtung des freien Endes (11) weniger als 18%, vorzugsweise weniger als 10%, insbesondere weniger als 5%, weiter insbesondere weniger als 2%, der Länge der Transportbahn (2) beträgt.

4. Singulationsförderer nach einem der Ansprüche 1 bis 3,
**dadurch gekennzeichnet, dass** wenigstens einige Fingerelemente (8,9) wenigstens im Wesentlichen in Richtung der freien Enden (11), vorzugsweise in entgegengesetzte Richtungen, quer zur Transportrichtung (T) der Stückgüter (3) entlang der Transportbahn (2) weisen und dass, vorzugsweise, die Länge wenigstens der wenigstens einigen Fingerelemente (8,9) in Richtung zum freien Ende (11) quer zur Transportbahn (2) weniger als 50%, vorzugsweise weniger als 23%, insbesondere weniger als 18%, weiter insbesondere weniger als 10% der Breite der Transportbahn (2) im Bereich der Fingerelemente (8,9) beträgt und/oder dass die Breite wenigstens der wenigstens einigen Fingerelemente (8,9) weniger als 10%, vorzugsweise weniger als 5%, insbesondere weniger als 2%, weiter insbesondere weniger als 1%, der Länge der Transportbahn (2) beträgt.

5. Singulationsförderer nach einem der Ansprüche 1 bis 4,
**dadurch gekennzeichnet, dass** die Fingerelemente (6,7,8,9,20) Transportmittel für den Transport der Stückgüter (3), vorzugsweise in der Transportrichtung (T) der Stückgüter (3) entlang der Transportbahn (2), insbesondere in Form von Rollen (30,31), Walzen, Gurten (24) oder Riemen aufweisen und/oder dass, die wenigstens eine Transportbahn (2) wenigstens abschnittsweise, insbesondere angrenzend zu wenigstens einigen Fingerelementen (6,7,8,9,16,20), durch wenigstens einen Rollenförderer (5) und/oder Gurtförderer gebildet ist.

6. Singulationsförderer nach einem der Ansprüche 1 bis 5,
**dadurch gekennzeichnet, dass** wenigstens abschnittsweise zwei Transportbahnen (2) übereinander vorgesehen sind und dass Fingerelemente (6,16,20) einer Transportbahn (2) in der oberen Stellung und/oder in der unteren Stellung eine Verbindung von der einen Transportbahn (2) zur wenigstens einen anderen Transportbahn (2) bilden, um Stückgüter von einer Transportbahn (2) zur anderen Transportbahn (2) zu leiten.

7. Singulationsförderer nach einem der Ansprüche 1 bis 6,
**dadurch gekennzeichnet, dass** die Stege (18) und die zugehörigen flexiblen Flankenelemente (17) jeweils einen spitzen Winkel α, vorzugsweise zwischen 10° und 80°, und einen stumpfen Winkel β, vorzugsweise zwischen 100° und 170° aufweisen und/oder dass die flexiblen Flankenelemente (17) der Fingerelemente (6,7,8,9,16,20) jeweils, insbesondere über eine Antriebseinrichtung (24), in Längsrichtung der Fingerelemente (6,7,8,9,16,20) derart gegeneinander verstellbar sind, so dass die Fingerelemente (6,7,8,9,16,20) durch ein Verstellen der flexiblen Flankenelemente (17) gegeneinander mehr oder weniger in vertikaler Richtung gekrümmt werden.

8. Singulationsförderer nach einem der Ansprüche 1 bis 7,
**dadurch gekennzeichnet, dass** wenigstens ein, vorzugsweise optischer, Sensor (12) zum Erfassen der Anzahl und/oder Art einzelner Stückgüter (3), der Lage einzelner Stückgüter (3), von Abmessungen einzelner Stückgüter (3), der Anordnung eines Haufens oder Pulks (4) von Stückgütern (3) und/oder der Form eines Haufens oder Pulks (4) von Stückgütern (3) vorgesehen ist und/oder dass wenigstens eine Steuereinrichtung (13) zur Steuerung des Verstellens von wenigstens einigen Fingerelementen (6,7,8,9,16,20) zweitabhängig, abhängig von der Anzahl und/oder Art einzelner gespeicherter Stückgüter (3) und/oder abhängig von wenigstens einen von dem Sensor (12) erfassten Parameter vorgesehen ist und/oder dass eine Stelleinrichtung (14) zum Verstellen der Höhe der freien Enden (11) der Fingerelemente (6,7,8,9,16,20) zeitabhängig, abhängig von der Anzahl und/oder Art einzelner gespeicherter Stückgüter (3), abhängig von wenigstens einem von dem Sensor (12) erfassten Parameter und/oder abhängig von Signalen der Steuereinrichtung (13) vorgesehen ist.

9. Verfahren zum Fördern und Vereinzeln von Stückgut (3), insbesondere von Packstücken und/oder Sendungen, entlang wenigstens einer die Stückgüter (3) tragenden Transportbahn (2) eines Singulationsförderers (1) nach einem der Ansprüche 1 bis 8, wobei in der Transportbahn (2) abschnittsweise zwischen einer unteren Stellung und einer oberen Stellung verstellbare Fingerelemente (6,7,8,9,16,20) vorgesehen sind, wobei die freien Enden (11) der Fingerelemente (6,7,8,9,16,20) in der oberen Stellung in einer oberen Position oberhalb eines angrenzenden Bereichs der Transportbahn (2) angeordnet sind,
- bei dem die Fingerelemente (6,7,8,9,16,20) wiederholt aus der unteren Stellung in die obere Stellung verstellt werden, um die Bewegungsrichtung und/oder der Bewegungsgeschwindigkeit jeweils einzelner Stückgüter (3) unabhängig von anderen Stückgütern (3) zu manipulieren und
- bei dem die Stückgüter (3) durch das wiederholte Verstellen der Fingerelemente (6,7,8,9,16,20) aus der unteren Stellung in die obere Stellung entlang der Transportbahn (2) und/oder quer zur Transportbahn (2) vereinzelt werden.

10. Verfahren nach Anspruch 9,
- bei dem einzelne Stückgüter (3) durch das Verstellen von in die Transportrichtung (T) der Transportbahn (2) weisenden Fingerelementen (6) von der unteren Stellung in die obere Stellung, insbesondere gegenüber anderen angrenzenden Stückgütern (3), beschleunigt werden und/oder
- bei dem einzelne Stückgüter (3) durch das Verstellen von entgegen der Transportrichtung (T) der Transportbahn (2) weisenden Fingerelementen (7) von der unteren Stellung in die obere Stellung, insbesondere gegenüber anderen angrenzenden Stückgütern (3), abgebremst werden.

11. Verfahren nach Anspruch 9 oder 10,
- bei dem einzelne Stückgüter (3) durch das Verstellen von quer zur Transportrichtung (T) der Transportbahn (2) weisenden Fingerelementen (8,9) von der unteren Stellung in die obere Stellung, insbesondere gegenüber anderen angrenzenden Stückgütern (3), in eine Richtung, insbesondere in entgegengesetzte Richtungen, quer zur Transportrichtung (T) bewegt werden und/oder
- bei dem wenigstens zeitweise einige Fingerelemente (6,7,8,9,16,20) in der oberen und einige, insbesondere in dieselbe Richtung und/oder die entgegengesetzte Richtung weisende, Fingerelemente (6,7,8,9,16,20) in der unteren Stellung angeordnet werden

12. Verfahren nach einem der Ansprüche 9 bis 11,
- bei dem mit wenigstens einem, insbesondere optischen, Sensor (12) zu vereinzelnde Stückgüter (3) auf der Transportbahn (2) erfasst werden und
- bei dem, vorzugsweise, wenigstens eine Steuereinrichtung (13) anhand der von dem wenigstens einen Sensor (12) erfassten Parameter ein Verstellen wenigstens einzelner von den zu vereinzelnden Stückgütern (3) zu passierenden Fingerelementen (6,7,8,9,16,20) zum Vereinzeln der Stückgüter (3) ermittelt und bei dem, weiter vorzugsweise, die Steuereinrichtung (13) Signale an Stelleinrichtungen (14) zum Verstellen der Fingerelemente (6,7,8,9,16,20) sendet, um die Fingerelemente (6,7,8,9,16,20) so zu verstellen, dass die zu vereinzelnden Stückgüter (3) vereinzelt werden.

13. Verfahren nach einem der Ansprüche 9 bis 12,
- bei dem Stückgüter (3) von einer Transportbahn (2) durch Verstellen von Fingerelementen(6) in eine obere Stellung und/oder in eine untere Stellung auf wenigstens eine wenigstens teilweise darüber und/oder darunter angeordnete andere Transportbahn (2) geleitet werden und
- bei dem, vorzugsweise, die Stückgüter (3) auf den wenigstens zwei Transportbahnen (2) durch das wiederholte Verstellen von Fingerelementen (6,7,8,9,16,20) der jeweiligen Transportbahn (2) aus der unteren Stellung in die obere Stellung entlang der jeweiligen Transportbahn (2) und/oder quer zur jeweiligen Transportbahn (2) vereinzelt werden.

14. Verfahren nach einem der Ansprüche 9 bis 13,
bei dem die Stückgüter (3) durch das wiederholte Verstellen von Fingerelementen (6,7,8,9,16,20) der jeweiligen Transportbahn (2) aus der unteren Stellung in die obere Stellung entlang der jeweiligen Transportbahn (2) und/oder quer zur jeweiligen Transportbahn (2) sortiert werden und, vorzugsweise,
bei dem die Stückgüter (3) an vorgegebenen Stellen zu wenigstens einer Seite von der Transportbahn (2) herunterbewegt werden.

## Claims

1. Singulation conveyor (1) for conveying and separating cargo (3), in particular packages and/or consignments, along at least one transport path (2) carrying the cargo (3), wherein finger elements (6,7,8,9,16,20) are provided in sections in the transport path (2), which are adjustable between a lower attitude and an upper attitude, and whereby the free ends (11) of the finger elements (6,7,8,9,16,20) are arranged in the upper attitude in an upper position above an adjacent region of the transport path (2), so as to manipulate the direction of movement and/or the speed of movement of each piece of cargo (3) independently of the remaining cargo (3),
**characterised in that**
the finger elements (6,7,8,9,16,20) each have at least two flexible edge elements (17) extending together in the longitudinal direction of the finger element (6,7,8,9,16,20) at least substantially up to the free end of the finger element (6,7,8,9,16,20) and **in that** these flexible edge elements (17) are each flexibly interconnected by a plurality of bars (18) in the longitudinal direction of the finger elements (6,7,8,9,16,20), so that the free ends (11) of the finger elements (6,7,8,9,16,20) can be moved from a lower attitude to an upper attitude and back.

2. Singulation conveyor according to claim 1,
**characterised in that**
the transport path (2) is supplied, at least adjacent to the finger elements (6,7,8,9,16,20) and/or at least with the exception of the finger elements (6,7,8,9,16,20) by at least one roller conveyor (5), strap conveyor and/or belt conveyor.

3. Singulation conveyor according to claim 1 or 2,
**characterised in that**
at least some of the finger elements (6,7) point in the direction of the free ends (11) at least substantially in the transport direction (T) of the cargo (3) along the transport path (2) and/or at least substantially opposite to the transport direction (T) of the cargo (3) along the transport path (2) and **in that**, preferably, the width of at least the at least some finger elements (6,7) transverse to the transport path (2) is less than 50%, preferably less than 23%, in particular less than 18%, more particularly less than 10%, of the width of the transport path (2) in the region of the finger elements (6,7) and/or that the length of at least the at least some finger elements (6,7) in the direction of the free end (11) is less than 18%, preferably less than 10%, in particular less than 5%, more particularly less than 2%, of the length of the transport path (2).

4. Singulation conveyor according to any one of claims 1 to 3,
**characterised in that**
at least some finger elements (8,9) point at least substantially in the direction of the free ends (11), preferably in opposite directions, transverse to the transport direction (T) of the cargo (3) along the transport path (2) and **in that**, preferably, the length of at least the at least some finger elements (8,9) in the direction of the free end (11) transverse to the transport path (2) is less than 50%, preferably less than 23%, in particular less than 18%, more particularly less than 10%, of the width of the transport path (2) in the region of the finger elements (8,9) and/or that the width of at least the at least some finger elements (8,9) is less than 10%, preferably less than 5%, in particular less than 2%, more particularly less than 1%, of the length of the transport path (2).

5. Singulation conveyor according to any one of claims 1 to 4,
**characterised in that**
the finger elements (6,7,8,9,20) have transport means for the transport of the cargo (3), preferably in the transport direction (T) of the cargo (3) along the transport path (2), in particular in the form of wheels (30,31), rollers, belts (24) or straps and/or **in that** the at least one transport path (2) is formed at least in sections, in particular adjacent to at least some finger elements (6,7,8,9,16,20), by at least one roller conveyor (5) and/or belt conveyor.

6. Singulation conveyor according to any one of claims 1 to 5,
**characterised in that**
at least in sections two transport paths (2) are provided one above the other and **in that** finger elements (6,16,20) of one transport path (2) in the upper attitude and/or in the lower attitude form a connection from the one transport path (2) to at least one other transport path (2), in order to direct cargo from one transport path (2) to the other transport path (2).

7. Singulation conveyor according to any one of claims 1 to 6,
**characterised in that**
the bars (18) and the associated flexible edge elements (17) each have an acute angle α, preferably between 10° and 80°, and an obtuse angle β, preferably between 100° and 170°, and/or that the flexible edge elements (17) of the finger elements (6,7,8,9,16,20) are each mutually adjustable in the longitudinal direction of the finger elements (6,7,8,9,16,20), in particular via a drive means (24), so that the finger elements (6,7,8,9,16,20) are curved by a displacement of the flexible edge elements (17) against one another more or less in a vertical direction.

8. Singulation conveyor according to any one of claims 1 to 7,
**characterised in that**
at least one, preferably optical, sensor (12) is provided for detecting the number and/or type of individual pieces of cargo (3), the location of individual pieces of cargo (3), dimensions of individual pieces of cargo (3), the arrangement of a heap or pile (4) of cargo (3) and/or the shape of a heap or pile (4) of cargo (3) and/or that at least one control device (13) is provided for controlling the adjusting of at least some finger elements (6,7,8,9,16,20) time-dependently, depending on the number and/or type of individually stored cargo (3) and/or depending on at least one parameter detected by the sensor (12) and/or **in that** a setting device (14) is provided for adjusting the height of the free ends (11) of the finger elements (6,7,8,9,16,20) time-dependently, depending on the number and/or type of individually stored cargo (3), depending on at least one parameter detected by the sensor (12) and/or depending on signals from the control device (13).

9. Method for conveying and separating cargo (3), in particular packages and/or consignments, along at least one transport path (2) of a singulation conveyor (1) carrying the cargo (3) according to any one of claims 1 to 8, whereby finger elements (6,7,8,9,16,20) are provided in sections in the transport path (2), which are adjustable between a lower attitude and an upper attitude, whereby the free ends (11) of the finger elements (6,7,8,9,16,20) are arranged in the upper attitude in an upper position above an adjacent region of the transport path (2),
- in which the finger elements (6,7,8,9,16,20) are repeatedly adjusted from the lower attitude to the upper attitude in order to manipulate the direction of movement and/or the speed of movement of individual pieces of cargo (3) independently of other cargo (3) and
- in which the cargo (3) is separated by the repeated adjustment of the finger elements (6,7,8,9,16,20) from the lower attitude to the upper attitude along the transport path (2) and/or transversely to the transport path (2).

10. Method according to claim 9,
- in which individual pieces of cargo (3) are accelerated by the adjustment of finger elements (6) pointing in the transport direction (T) of the transport path (2) from the lower attitude to the upper attitude, in particular with respect to other adjacent cargo (3), and/or
- in which individual pieces of cargo (3) are decelerated by adjusting finger elements (7) pointing opposite to the transport direction (T) of the transport path (2) from the lower attitude to the upper attitude, in particular with respect to other adjacent cargo (3).

11. Method according to claim 9 or 10,
- in which individual pieces of cargo (3) are moved by the adjustment of finger elements (8,9) pointing transverse to the transport direction (T) of the transport path (2) from the lower attitude to the upper attitude, in particular with respect to other adjacent cargo (3), in one direction, in particular in opposite directions, transverse to the transport direction (T) and/or
- in which at least temporarily some finger elements (6,7,8,9,16,20) are arranged in the upper attitude and some finger elements (6,7,8,9,16,20) are arranged in the lower attitude, in particular those pointing in the same direction and/or pointing in the opposite direction.

12. Method according to any one of claims 9 to 11,
- in which the cargo (3) on the transport path (2), which is to be separated, is detected with at least one, in particular optical, sensor (12) and
- in which, preferably, at least one control device (13) determines, on the basis of parameters detected by the at least one sensor (12), to make an adjustment to at least individual finger elements (6,7,8,9,16,20), which are to be passed by the cargo (3) to be separated, in order to separate the cargo (3) and in which, more preferably, the control device (13) sends signals to setting devices (14) for adjusting the finger elements (6,7,8,9,16,20), in order to adjust the finger elements (6,7,8,9,16,20) in such a way that the cargo (3) to be separated is separated.

13. Method according to any one of claims 9 to 12,
- in which the cargo (3) is conducted from one transport path (2) by adjusting finger elements (6) into an upper attitude and/or into a lower attitude on at least one other transport path (2) arranged at least partially above and/or below and
- in which, preferably, the cargo (3) is separated on the at least two transport paths (2) by the repeated adjustment of finger elements (6,7,8,9,16,20) of the respective transport path (2) from the lower attitude to the upper attitude along the respective transport path (2) and/or transversely to the respective transport path (2).

14. Method according to any one of claims 9 to 13,
in which the cargo (3) is sorted by the repeated adjustment of finger elements (6,7,8,9,16,20) of the respective transport path (2) from the lower attitude to the upper attitude along the respective transport path (2) and/or transversely to the respective transport path (2) and, preferably,
in which the cargo (3) is moved down at predetermined locations to at least one side of the transport path (2).

## Revendications

1. Convoyeur de singularisation (1) destiné à transporter et à individualiser des marchandises à la pièce (3), notamment des colis et/ou des envois, le long d'au moins une bande transporteuse (2) qui porte les marchandises à la pièce (3), des éléments en doigt (6, 7, 8, 9, 16, 20) se trouvant dans la bande transporteuse (2), lesquels peuvent être positionnés dans certaines portions entre une position inférieure et une position supérieure, et les extrémités libres (11) des éléments en doigt (6, 7, 8, 9, 16, 20) dans la position supérieure étant disposés dans une position supérieure au-dessus d'une zone adjacente de la bande transporteuse (2) de manière à manipuler le sens de déplacement et/ou la vitesse de déplacement des marchandises à la pièce (3) individuelles respectives indépendamment des autres marchandises à la pièce (3),
**caractérisé en ce que** les éléments en doigt (6, 7, 8, 9, 16, 20) possèdent respectivement deux éléments de flanc (17) flexibles qui s'étendent conjointement dans le sens longitudinal de l'élément en doigt (6, 7, 8, 9, 16, 20) au moins sensiblement jusqu'à l'extrémité libre de l'élément en doigt (6, 7, 8, 9, 16, 20) et **en ce que** les éléments de flanc (17) flexibles sont reliés les uns aux autres de manière flexible dans le sens longitudinal des éléments en doigt (6, 7, 8, 9, 16, 20) respectivement par le biais d'une pluralité d'éléments jointifs (18), de sorte que les extrémités libres (11) des éléments en doigt (6, 7, 8, 9, 16, 20) peuvent être positionnées d'une position inférieure en une position supérieure et inversement.

2. Convoyeur de singularisation selon la revendication 1, **caractérisé en ce que** la bande transporteuse (2) est présentée au moins adjacente aux éléments en doigt (6, 7, 8, 9, 16, 20) et/ou au moins avec exception des éléments en doigt (6, 7, 8, 9, 16, 20) par au moins un convoyeur à rouleaux (5), un convoyeur à courroie et/ou un convoyeur à bande.

3. Convoyeur de singularisation selon la revendication 1 ou 2, **caractérisé en ce qu'**au moins certains éléments en doigt (6, 7) en direction des extrémités libres (11) sont orientés au moins sensiblement dans la direction de transport (T) des marchandises à la pièce (3) le long de la bande transporteuse (2) et/ou au moins sensiblement en sens inverse de la direction de transport (T) des marchandises à la pièce (3) le long de la bande transporteuse (2) et **en ce que**, de préférence, la largeur d'au moins les au moins certains éléments en doigt (6, 7) transversalement à la bande transporteuse (2) est inférieure à 50 %, de préférence inférieure à 23 %, notamment inférieure à 18 %, encore notamment inférieure à 10 % de la largeur de la bande transporteuse (2) dans la zone des éléments en doigt (6, 7) et/ou **en ce que** la longueur d'au moins les au moins certains éléments en doigt (6, 7) en direction de l'extrémité libre (11) est inférieure à 18 %, de préférence inférieure à 10 %, notamment inférieure à 5 %, encore notamment inférieure à 2 % de la longueur de la bande transporteuse (2).

4. Convoyeur de singularisation selon l'une des revendications 1 à 3, **caractérisé en ce qu'**au moins certains éléments en doigt (8, 9) au moins sensiblement en direction des extrémités libres (11), de préférence dans les directions opposées, sont orientés transversalement à la direction de transport (T) des marchandises à la pièce (3) le long de la bande transporteuse (2) et **en ce que**, de préférence, la longueur d'au moins les au moins certains éléments en doigt (8, 9) en direction de l'extrémité libre (11) transversalement à la bande transporteuse (2) est inférieure à 50 %, de préférence inférieure à 23 %, notamment inférieure à 18 %, encore notamment inférieure à 10 % de la largeur de la bande transporteuse (2) dans la zone des éléments en doigt (8, 9) et/ou **en ce que** la largeur d'au moins les au moins certains éléments en doigt (8, 9) est inférieure à 10 %, de préférence inférieure à 5 %, notamment inférieure à 2 %, encore notamment inférieure à 1 % de la longueur de la bande transporteuse (2).

5. Convoyeur de singularisation selon l'une des revendications 1 à 4, **caractérisé en ce que** les éléments en doigt (6, 7, 8, 9, 20) possèdent des moyens de transport pour le transport des marchandises à la pièce (3), de préférence dans la direction de transport (T) des marchandises à la pièce (3) le long de la bande transporteuse (2), notamment sous la forme de galets (30, 31), de rouleaux, de courroies(24) ou de bandes et/ou **en ce que** l'au moins une bande transporteuse (2) est formée au moins dans certaines portions, notamment de manière adjacente à au moins certains éléments en doigt (6, 7, 8, 9, 16, 20), par au moins un convoyeur à galets (5) et/ou d'un convoyeur à courroie.

6. Convoyeur de singularisation selon l'une des revendications 1 à 5, **caractérisé en ce qu'**au moins dans certaines portions, deux bandes transporteuses (2) sont présentes l'une au-dessus de l'autre et **en ce que** les éléments en doigt (6, 16, 20) d'une bande transporteuse dans la position supérieure et/ou dans la position inférieure forment une liaison d'une bande transporteuse (2) à au moins une autre bande transporteuse (2) afin de mener les marchandises à la pièce d'une bande transporteuse (2) à l'autre bande transporteuse (2).

7. Convoyeur de singularisation selon l'une des revendications 1 à 6, **caractérisé en ce que** les éléments jointifs (18) et les éléments de flanc (17) flexibles associés présentent respectivement un angle aigu α, de préférence entre 10° et 80°, et un angle obtus β, de préférence entre 100° et 170° et/ou **en ce que** les éléments de flanc (17) flexibles des éléments en doigt (6, 7, 8, 9, 16, 20) sont respectivement positionnables les uns par rapport aux autres dans le sens longitudinal des éléments en doigt (6, 7, 8, 9, 16, 20), notamment par le biais d'un dispositif d'entraînement (24), de telle sorte que les éléments en doigt (6, 7, 8, 9, 16, 20) sont plus ou moins incurvés dans la direction verticale par un positionnement des éléments de flanc (17) flexibles.

8. Convoyeur de singularisation selon l'une des revendications 1 à 7, **caractérisé en ce qu'**au moins un capteur (12), de préférence optique, est présent pour la détection du nombre et/ou de la nature des marchandises à la pièce (3) individuelles, de la position des marchandises à la pièce (3) individuelles, des dimensions des marchandises à la pièce (3) individuelles, de la disposition d'un tas ou d'un groupe (4) de marchandises à la pièce (3) et/ou de la forme d'un tas ou d'un groupe (4) de marchandises à la pièce (3) et/ou **en ce qu'**au moins un dispositif de commande (13) est présent pour commander le positionnement d'au moins certains éléments en doigt (6, 7, 8, 9, 16, 20) en fonction du temps, en fonction du nombre et/ou de la nature des marchandises à la pièce (3) individuelles enregistrées et/ou en fonction d'au moins un paramètre détecté par le capteur (12) et/ou **en ce qu'**un dispositif de réglage (14) est présent pour le positionnement de la hauteur des extrémités libres (11) des éléments en doigt (6, 7, 8, 9, 16, 20) en fonction du temps, en fonction du nombre et/ou de la nature des marchandises à la pièce (3) individuelles enregistrées, en fonction d'au moins un paramètre détecté par le capteur (12) et/ou en fonction de signaux du dispositif de commande (13).

9. Procédé pour transporter et individualiser des marchandises à la pièce (3), notamment des colis et/ou des envois, le long d'au moins une bande transporteuse (2), d'un convoyeur de singularisation selon l'une des revendications 1 à 8, qui porte les marchandises à la pièce (3), des éléments en doigt (6, 7, 8, 9, 16, 20) se trouvant dans la bande transporteuse (2), lesquels peuvent être positionnés dans certaines portions entre une position inférieure et une position supérieure, les extrémités libres (11) des éléments en doigt (6, 7, 8, 9, 16, 20) dans la position supérieure étant disposés dans une position supérieure au-dessus d'une zone adjacente de la bande transporteuse (2)
- procédé selon lequel les éléments en doigt (6, 7, 8, 9, 16, 20) sont positionnés de manière répétée de la position inférieure à la position supérieure afin de manipuler le sens de déplacement et/ou la vitesse de déplacement des marchandises à la pièce (3) individuelles respectives indépendamment des autres marchandises à la pièce (3) et
- procédé selon lequel les marchandises à la pièce (3) sont individualisées le long de la bande transporteuse (2) et/ou transversalement à la bande transporteuse (2) par le positionnement répété des éléments en doigt (6, 7, 8, 9, 16, 20) de la position inférieure à la position supérieure.

10. Procédé selon la revendication 9,
- selon lequel les marchandises à la pièce (3) individuelles sont accélérées, notamment par rapport aux autres marchandises à la pièce (3) adjacentes, par le positionnement d'éléments en doigt (6) orientés dans la direction de transport (T) de la bande transporteuse (2) de la position inférieure à la position supérieure, et/ou
- selon lequel les marchandises à la pièce (3) individuelles sont freinées, notamment par rapport aux autres marchandises à la pièce (3) adjacentes, par le positionnement d'éléments en doigt (7) orientés à l'opposé de la direction de transport (T) de la bande transporteuse (2) de la position inférieure à la position supérieure.

11. Procédé selon la revendication 9 ou 10,
- selon lequel les marchandises à la pièce (3) individuelles sont déplacées dans une direction, notamment dans des directions opposées, transversalement à la direction de transport (T), notamment par rapport aux autres marchandises à la pièce (3) adjacentes, par le positionnement d'éléments en doigt (8, 9) orientés transversalement à la direction de transport (T) de la bande transporteuse (2) de la position inférieure à la position supérieure, et/ou
- selon lequel certains éléments en doigt (6, 7, 8, 9, 16, 20) dans la position supérieure et certains éléments en doigt (6, 7, 8, 9, 16, 20), notamment orientés dans la même direction et/ou dans la direction opposée, sont au moins temporairement disposés dans la position inférieure.

12. Procédé selon l'une des revendications 9 à 11,
- selon lequel les marchandises à la pièce (3) à individualiser sont détectées sur la bande transporteuse (2) avec au moins un capteur (12), notamment optique, et
- selon lequel, de préférence au moins un dispositif de commande (13) détermine, à l'aide du paramètre détecté par l'au moins un capteur (12), un positionnement d'au moins certains des éléments en doigt (6, 7, 8, 9, 16, 20) qui sont passer par les marchandises à la pièce (3) à individualiser en vue d'individualiser les marchandises à la pièce (3) et
- selon lequel, encore de préférence, le dispositif de commande (13) envoie des signaux à des dispositifs de réglage (14) destinés à positionner les éléments en doigt (6, 7, 8, 9, 16, 20) en vue de positionner les éléments en doigt (6, 7, 8, 9, 16, 20) de telle sorte que les marchandises à la pièce (3) à individualiser sont individualisées.

13. Procédé selon l'une des revendications 9 à 12,
- selon lequel les marchandises à la pièce (3) sont menées d'une bande transporteuse (2) sur au moins une autre bande transporteuse (2) disposée au moins partiellement au-dessus et/ou au-dessous de celle-ci par positionnement d'éléments en doigt (6) dans une position supérieure et/ou dans une position inférieure et
- selon lequel, de préférence, les marchandises à la pièce (3) sur les au moins deux bandes transporteuses (2) sont individualisées le long de la bande transporteuse (2) respective et/ou transversalement à la bande transporteuse (2) respective par le positionnement répété des éléments en doigt (6, 7, 8, 9, 16, 20) de la bande transporteuse (2) respective de la position inférieure à la position supérieure.

14. Procédé selon l'une des revendications 9 à 13,
- selon lequel les marchandises à la pièce (3) sont triées le long de la bande transporteuse (2) respective et/ou transversalement à la bande transporteuse (2) respective par le positionnement répété des éléments en doigt (6, 7, 8, 9, 16, 20) de la bande transporteuse (2) respective de la position inférieure à la position supérieure et, de préférence
- selon lequel les marchandises à la pièce (3) sont descendues de la bande transporteuse (2) vers au moins un côté au niveau de points prédéfinis.
